(19) Europäisches Patentamt
European Patent Office
Office européen des brevets

(11) **EP 3 670 145 A1**

(12) **EUROPÄISCHE PATENTANMELDUNG**

(43) Veröffentlichungstag:
**24.06.2020 Patentblatt 2020/26**

(51) Int Cl.:
***B29C 53/12*** *(2006.01)*

(21) Anmeldenummer: 18213825.5

(22) Anmeldetag: **19.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **BASF Polyurethanes GmbH**
**49448 Lemförde (DE)**

(72) Erfinder:
• **DAUN, Gregor**
**67056 Ludwigshafen am Rhein (DE)**

• **WUCHERPFENNIG, Jan**
**49448 Lemförde (DE)**
• **EILS, Henning**
**49448 Lemförde (DE)**
• **MOELLER, Martin**
**67056 Ludwigshafen am Rhein (DE)**

(74) Vertreter: **Altmann Stößel Dick Patentanwälte PartG mbB**
**Dudenstrasse 46**
**68167 Mannheim (DE)**

(54) **VERFAHREN ZUR HERSTELLUNG EINES FORMELEMENTS**

(57) Die Erfindung betrifft ein Verfahren zur Herstellung mindestens eines Formelements (110). Weiterhin betrifft die Erfindung ein Formelement (110), ein Computerprogramm sowie eine Vorrichtung (148) zum Herstellen von Formelementen (110). Das Verfahren zur Herstellung mindestens eines Formelements (110) umfasst:

a) Bereitstellen eines Halbzeugs (114) in einem biegeschlaffen Zustand (I), wobei das Halbzeug (114) ein Reaktivkunststoff-Material und Verstärkungsfasern aufweist, wobei die Verstärkungsfasern zumindest teilweise in das Reaktivkunststoff-Material eingebettet sind;

b) Überführen des Halbzeugs (114) von dem biegeschlaffen Zustand (I) in einen formbaren Zustand (II) durch Zufuhr einer ersten Energiemenge, wobei das Halbzeug (114) in dem biegeschlaffen Zustand (I) einen ersten Umsatzgrad aufweist, wobei das Halbzeug (114) in einem formbaren Zustand (II) einen zweiten Umsatzgrad aufweist, wobei der erste Umsatzgrad geringer ist als der zweite Umsatzgrad;

c) Formen des Halbzeugs(114), wobei dem Halbzeug (114) die Geometrie des Formelements (110) aufgeprägt wird, wobei das Halbzeug (114) während der Formgebung von dem formbaren Zustand (II) in einen formstabilen Zustand (III) überführt wird; und

d) Überführen des Halbzeugs (114) von dem formstabilen Zustand (III) in einen biegesteifen Zustand (IV).

FIG.2

EP 3 670 145 A1

**Beschreibung**

Die vorliegende Erfindung betrifft ein Verfahren zur Herstellung eines Formelements. Weiterhin betrifft die Erfindung ein Formelement, ein Computerprogramm sowie eine Vorrichtung zum Herstellen von Formelementen.

Bauteile aus faserverstärkten Kunststoffen zeichnen sich gegenüber Metallteilen durch eine Vielzahl von Vorteilen wie beispielsweise Gewichtsersparnis, Korrosionsbeständigkeit und Versagens-Zuverlässigkeit aus und finden daher eine zunehmende Anwendung in Industrie und Forschung. Faserverstärkte Kunststoffe enthalten als wesentliche Komponenten ein Matrixsystem aus Kunststoff in das Verstärkungsfasern, beispielsweise basierend auf Glas, Kohlenstoff, Aramid oder Nylon, eingebettet sind. Dabei werden besonders stark belastete Bauteile wie z.B. Windturbinenflügel, Tennisschläger oder Blattfedern mit Endlosfasern, also nicht geschnittenen Fasern, gefertigt. Die so verstärkten Kunststoffe können wegen ihrer hohen Festigkeit im ausreagierten Zustand kaum mehr umgeformt werden. Daher werden endlosfaserverstärkte Bauteile in der Regel aus flüssigen duroplastischen Reaktivkunststoffen, seltener auch aus flüssigen thermoplastischen Reaktivkunststoffen hergestellt, die erst in der endgültigen Form ausreagieren.

Duroplastische Reaktivkunststoffe durchlaufen bei ihrer Herstellung eine Aushärtungsreaktion von einem flüssigen Gemisch von Monomeren zu einem kovalent vernetzten Netzwerk aus Makromolekülen. Thermoplastische Reaktivkunststoffe durchlaufen bei ihrer Herstellung eine Aushärtungsreaktion von einem flüssigen Gemisch von Monomeren zu einem Feststoff aus langkettigen Makromolekülen. So werden faserverstärkte Reaktivkunststoffe in der Regel in flüssigem Zustand mit den Fasern in einer Form in Kontakt gebracht oder gemeinsam als bereits verbundenes Halbzeug in eine Form gelegt und in der Form beispielsweise durch Wärmezufuhr ausgehärtet. Abhängig von dem verwendeten System, insbesondere von der chemischen Zusammensetzung des Materials, kann die Aushärtungsreaktion über wenige Minuten bis zu mehreren Stunden dauern. Für eine wirtschaftliche Herstellung von faserverstärkten Reaktivkunststoff-Bauteilen ist eine möglichst kurze Aufenthaltszeit des Materials in der Form, insbesondere eine möglichst kurze Belegzeit der Form, wünschenswert. Ein herkömmlich angewandtes Verfahren zur Verkürzung der Belegzeit der Form, ist ein Vorheizen des Halbzeugs vor dem Einlegen in die Form, d.h. ein Erwärmen des noch unvernetzten flüssigen Reaktivkunststoffes und der darin eingebetteten Fasern bevor diese in die Form gelegt werden. In der Regel wird ein Vorwärmen mit Dampf, Heißluft, Strahlung oder durch Induktion verwendet, wie z.B. in US 2,512,364 A beschrieben.

Trotz der zeitlichen Effizienz von aus dem Stand der Technik bekannten Verfahren zur Herstellung von faserverstärkten Reaktivkunststoff-Bauteilen, wie beispielsweise in FR 2 837 250 A1, JP 54-90272 A und DE 30 37 616 A1 beschrieben, können die Fertigungszeiten, insbesondere von in großen Stückzahlen verwendeten Formteilen wie beispielsweise Schraubenfedern, nicht mit den Fertigungszeiten für Metallteile konkurrieren. So sind die Stückzeiten von Herstellungs- und Fertigungsverfahren für metallische oder thermoplastische Formteile, wie beispielsweise aus DE 40 15 117 A1, DE 10 2005 013 750 B3, US 2002/046587 A1 und DE 10 2012 219 639 A1 bekannt, in der Regel geringer als die Stückzeiten für form- oder funktionsgleiche faserverstärkte Reaktivkunststoffe. Eine Verringerung der Stückzeiten von endlosfaserverstärkten Formteilen aus Reaktivkunststoffen geht in der Regel zu Lasten von Qualität und Lebensdauer der hergestellten Bauteile. Um eine steigende Nachfrage von faserverstärkten Reaktivkunststoff-Bauteilen zu bedienen, ohne Kompromisse in Qualität und Lebensdauer einzugehen, sind schnelle und zuverlässige Herstellungsverfahren für endlosfaserverstärkte Reaktivkunststoff-Bauteile wünschenswert.

Es ist daher Aufgabe der vorliegenden Erfindung ein Verfahren zur Herstellung eines Formelements sowie ein Formelement, ein Computerprogramm und eine Vorrichtung zum Herstellen von Formelementen bereitzustellen, welche die Nachteile bekannter Vorrichtungen und Verfahren zumindest weitgehend vermeiden. Insbesondere soll eine effiziente und zuverlässige Herstellung von Formelementen, ohne Kompromisse in Qualität und Lebensdauer der Formelemente, gewährleistet werden.

Diese Aufgabe wird gelöst durch Verfahren, Vorrichtungen und Computerprogramme mit den Merkmalen der unabhängigen Patentansprüche. Vorteilhafte Ausführungsformen, die isoliert oder in beliebigen Kombinationen realisiert werden können, sind in den abhängigen Ansprüchen aufgeführt.

Im Folgenden werden die Begriffe "haben", "aufweisen", "umfassen" oder "einschließen" oderbeliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merk-male vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe oder ähnliche Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elements. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann. Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, deren Beschreibung durch diese Begriffe eingeleitet wird, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden sollen. Weiterhin sollen durch diese einleitenden Ausdrücke sämtliche Möglichkeiten, die hierdurch eingeleiteten Merkmale mit anderen Merkmalen zu kombinieren, seien es optionale oder nichtoptionale Merkmale, unangetastet bleiben.

In einem ersten Aspekt wird ein Verfahren zur Herstellung mindestens eines Formelements vorgeschlagen, wobei das Formelement eine Geometrie aufweist. Das Verfahren umfasst die folgenden Schritte:

a) Bereitstellen eines Halbzeugs in einem biegeschlaffen Zustand (I), wobei das Halbzeug ein Reaktivkunststoff-Material und Verstärkungsfasern aufweist, wobei die Verstärkungsfasern zumindest teilweise in das Reaktivkunststoff-Material eingebettet sind;

b) Überführen des Halbzeugs von dem biegeschlaffen Zustand (I) in einen formbaren Zustand (II) durch Zufuhr einer ersten Energiemenge, wobei das Halbzeug in dem biegeschlaffen Zustand (I) einen ersten Umsatzgrad aufweist, wobei das Halbzeug in einem formbaren Zustand (II) einen zweiten Umsatzgrad aufweist, wobei der erste Umsatzgrad geringer ist als der zweite Umsatzgrad;

c) Formen des Halbzeugs, wobei dem Halbzeug die Geometrie des Formelements aufgeprägt wird, wobei das Halbzeug während der Formgebung von dem formbaren Zustand (II) in einen formstabilen Zustand (III) überführt wird; und

d) Überführen des Halbzeugs von dem formstabilen Zustand (III) in einen biegesteifen Zustand (IV).

Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie in der vorliegenden Anmeldung erwähnt werden oder nicht, zusätzlich ausgeführt werden.

Unter einem "Formelement" ist ein beliebiges Element, insbesondere Formteil, zu verstehen, welches einen ausgehärteten faserverstärkten Reaktivkunststoff, insbesondere einen ausgehärteten faserverstärkten Duroplasten oder Thermoplasten, umfasst und eine Geometrie, insbesondere eine freigeformte Geometrie, aufweist. So kann das Formelement beispielsweise eine Feder, insbesondere eine Schraubenfeder oder eine Drehstabfeder, ein Rohr, ein Stabilisator, ein Lenkgestänge, ein Handlauf, ein Geländer, eine Blattfeder, eine Mäanderfeder, eine C-Feder oder ähnliches sein. Beispielsweise kann das Formelement auch Stabilisatoren und Schraubenfedern, insbesondere für automobile Anwendungen, umfassen.

Unter einem "Halbzeug" ist ein beliebiges vorgefertigtes Werkstück, insbesondere ein Rohling, zu verstehen. Insbesondere kann das Halbzeug ein vorgefertigtes Stoffgemisch, welches in einem Reaktivkunststoff, insbesondere in einer duroplastischen oder thermoplastischen Matrix, getränkte oder imprägnierte Verstärkungsfasern aufweisen, wobei eine Aushärtungsreaktion des Reaktivkunststoff-Materials noch nicht abgeschlossen ist. Die Verstärkungsfasern sind zumindest teilweise in das Reaktivkunststoff-Material eingebettet. Beispielsweise kann das Halbzeug Verstärkungsfasern aufweisen, welche mit einem unvernetzten oder ungehärteten duroplastischen oder thermoplastischen Material, beispielsweise einem Reaktivharz, benetzt oder imprägniert sind.

Unter "Imprägnieren" kann ein beliebiger Vorgang verstanden werden, bei welchem ein fester Stoff mit einer gelösten, emulgierten oder dispergierten Substanz behandelt, insbesondere in Kontakt gebracht, wird. Nach der Imprägnierung kann zumindest ein Teil der Substanz auf einer Oberfläche des Stoffs verbleiben. So kann das Halbzeug beispielsweise Fasern, insbesondere Verstärkungsfasern, umfassen deren Oberfläche mit dem duroplastischen oder thermoplastischen Material benetzt ist. Die Verstärkungsfasern können beispielsweise auf Glas, Kohlenstoff, Aramid, Nylon, Flachs, Jute oder Baumwolle basieren. So können die Verstärkungsfasern beispielsweise ausgewählt sein aus der Gruppe bestehend aus Glasfasern, Kohlefasern, Basaltfasern, Nylon-Fasern und Aramid-Fasern. Insbesondere können als Verstärkungsfasern beispielsweise Glas- oder Kohlenstofffasern unterschiedlicher Eigenschaften, insbesondere mit unterschiedlichen Festigkeiten und/oder Steifigkeiten, verwendet werden. Unter "Verstärkungsfaser(n)" können im Rahmen der vorliegenden Erfindung Endlosfasern verstanden werden, welche als Einzelfaser oder gebündelt eingesetzt werden. Die Verstärkungsfasern können in Form von so genannten "Rovings" als Bündel, Strang oder Multifilamentgarn aus im Wesentlichen parallel angeordneten Filamenten (Endlosfasern) eingesetzt werden. Der Querschnitt eines Rovings ist vorzugsweise elliptisch oder rechteckig, wobei elliptisch auch die runde Form umfasst. Bevorzugt werden Glasfaser-Rovings mit einer Feinheit im Bereich von 100 bis 10.000 tex, vorzugsweise im Bereich von 600 bis 4000 tex, eingesetzt.

Das Halbzeug, insbesondere ein Faser-Matrix-Halbzeug, kann beispielsweise als Strangprofil vorliegen. Insbesondere kann das Halbzeug beispielsweise ein in einem Filamentwinding-, einem Pultrusions- oder einem Pullwinding-Verfahren, beispielsweise in sogenannten Prepreg-Maschinen, hergestelltes Strangprofil sein.

Unter einem "Reaktivkunststoff-Material" ist grundsätzlich ein beliebiges Kunststoff-Material zu verstehen. Insbesondere kann das Reaktivkunststoff-Material ein Reaktivkunststoff sein dessen Monomere zu Beginn einer Verarbeitung vorwiegend unreagiert vorliegen und erst im Verlauf der Verarbeitung zu thermoplastischen Makromolekülen oder duroplastischen Netzwerken polymerisieren. So kann das Reaktivkunststoff-Material beispielsweise ein duroplastisches Material, zum Beispiel ein Duroplastsystem, umfassen. Insbesondere kann das Reaktivkunststoff-Material ein thermoplastisches Material, beispielsweise ein Thermoplastsystem, umfassen.

Unter einem "duroplastischen Material" ist grundsätzlich ein beliebiges Duromer oder ein beliebiges Material einer Vorstufe eines Duromer oder Duroplast zu verstehen. Insbesondere kann das duroplastische Material beispielsweise ein Reaktivharz, insbesondere ein Stoffgemisch, umfassen, welches eingerichtet ist, um bei seiner Herstellung eine Aushärtungsreaktion zu durchlaufen. Insbesondere kann das duroplastische Material beispielsweise ein Duroplastsystem sein. Unter einem "Duroplastsystem" ist ein duroplastisches Matrixsystem zu verstehen. Das Duroplastsystem kann mindestens ein Matrixsystem umfassend mindestens ein duroplastisches Polymer aufweisen. Das Duroplastsystem kann ein Duroplastsystem auf Basis von Polyester, Epoxidharz, Vinylester, Dicyclopentadien, Polyurethan, Acrylat oder Polyurethan-Acrylat sein.

Unter einem "thermoplastischen Material" ist insbesondere ein Reaktivharz, insbesondere ein Stoffgemisch, zu verstehen, welches eingerichtet ist, um bei seiner Herstellung eine Aushärtungsreaktion zu durchlaufen. Insbesondere kann das thermoplastische Material beispielsweise ein Thermoplastsystem sein. Unter einem "Thermoplastsystem" ist ein reaktives thermoplastisches Matrixsystem zu verstehen. Das Thermoplastsystem kann mindestens ein Matrixsystem umfassend mindestens ein thermoplastisches Polymer aufweisen. Das Thermoplastsystem kann ein Thermoplastsystem auf Basis von Caprolactam oder Polymethyl Methacrylat sein.

Unter einer "Aushärtungsreaktion" ist grundsätzlich eine Polymerisation oder Vernetzungsreaktion zu verstehen bei der Monomere in Polymere überführt werden. Beispielsweise kann die Aushärtungsreaktion ein Gemisch von Monomeren, insbesondere ein flüssiges Gemisch von Monomeren, in kovalent vernetzte Polymere, insbesondere in ein Netzwerk aus duroplastischen Makromolekülen oder eine feste Mischung von thermoplastischen langkettigen Makromolekülen überführen. Beispielsweise kann ein Fortschritt der Aushärtungsreaktion des Materials mittels eines durchschnittlichen Umsatzgrads p des Reaktivkunststoffs angegeben sein. Die Aushärtungsreaktion kann beispielsweise eine exotherme Reaktion sein.

Unter einem "Umsatzgrad" ist im Rahmen der vorliegenden Erfindung grundsätzlich ein Anteil von zu Polymeren vernetzten Monomeren zu verstehen. Insbesondere kann es sich bei dem Umsatzgrad um einen Anteil von abreagierten Monomermolekülen handeln. So kann der Umsatzgrad insbesondere in % angegeben sein. Beispielsweise kann es sich bei dem Umsatzgrad auch um eine Zahl, beispielsweise eine Anzahl, von abreagierten Monomermolekülen handeln. So kann der Umsatzgrad beispielsweise eine Differenz zwischen einer Anzahl $N_0$ von ursprünglich, beispielsweise in dem flüssigen Ausgangsmaterial, vorhandenen Monomermolekülen und einer Anzahl $N$ von aktuell, also beispielsweise in einem momentanen Zustand, vorhandenen Monomermolekülen, in einem Verhältnis zur Anzahl $N_0$ der ursprünglich vorhandenen Monomermoleküle sein. Insbesondere kann der Umsatzgrad $p$ beispielsweise mittels eines Quotienten gemäß folgender Vorschrift bestimmbar sein:

$$p = \frac{N_0 - N}{N_0}$$

So kann ein Zähler des Quotienten zur Bestimmung des Umsatzgrads $p$ beispielsweise die Differenz zwischen der Anzahl $N_0$ von ursprünglich vorhandenen Monomermolekülen und der Anzahl $N$ von aktuell vorhandenen Monomermolekülen umfassen. Ein Nenner des Quotienten zur Bestimmung des Umsatzgrads $p$ kann beispielsweise der Anzahl $N_0$ von ursprünglich vorhandenen Monomermolekülen entsprechen.

Im Zusammenhang mit dem Umsatzgrad, jedoch auch in anderem Zusammenhang, werden die Begriffe "erste", "zweite" sowie weitere Begriffe ähnlicher Art als Nomenklatur verwendet, ohne hierdurch eine Reihenfolge oder Rangfolge vorzugeben. Auch können mehrere "erste" oder "zweite" Eigenschaften und/oder Elemente vorgesehen sein.

In Schritt a) wird beispielsweise ein Halbzeug in einem biegeschlaffen Zustand (I) bereitgestellt, wobei das Halbzeug in dem biegeschlaffen Zustand (I) einen ersten Umsatzgrad $p_1$ aufweist. Beispielsweise kann unter "Bereitstellen des Halbzeugs in einem biegeschlaffen Zustand (I)" ein Erzeugen und/oder Herstellen des Halbzeugs in dem biegeschlaffen Zustand (I) verstanden werden. Insbesondere kann das Halbzeug in dem biegeschlaffen Zustand (I) beispielsweise als Strangprofil bereitgestellt werden.

Unter einem "Halbzeug in einem biegeschlaffen Zustand" ist grundsätzlich ein beliebiges formlabiles Halbzeug zu verstehen. So kann das Halbzeug in dem biegeschlaffen Zustand (I) beispielsweise unter Einfluss einer Schwerkraft seine Form, beispielsweise seine Geometrie, verändern. Insbesondere kann das Halbzeug in dem biegeschlaffen Zustand (I) durch Anpassung seiner Form einer Schwerkraft nachgeben. In dem biegeschlaffen Zustand (I) kann das Halbzeug, insbesondere das Reaktivkunststoff-Material des Halbzeugs, beispielsweise auch als Kunststoff-Material des Halbzeugs bezeichnet, eine Viskosität $\eta_1$ aufweisen. Die Viskosität $\eta_1$ des Kunststoff-Materials des Halbzeug in dem biegeschlaffen Zustand kann insbesondere in Millipascalsekunden (mPa s) gemessen werden. Beispielsweise kann 10 mPa s $\leq \eta_1 \leq$ 60 000 mPa s, insbesondere 100 mPa s $\leq \eta_1 \leq$ 40 000 mPa s, vorzugsweise 1000 mPa s $\leq \eta_1 \leq$ 20 000 mPa s, sein. Beispielsweise kann das Halbzeug in dem biegeschlaffen Zustand (I) die Viskosität $\eta_1$ bei einer Raumtemperatur aufweisen, beispielsweise bei 20 °C. Insbesondere kann der erste Umsatzgrad $p_1$ des Halbzeugs in dem biegeschlaffen Zustand beispielsweise 0 % < $p_1 \leq$ 20 %, insbesondere 0 % < $p_1 \leq$ 15 %, vorzugsweise 0 % < $p_1 \leq$ 10 %, sein.

Das Überführen des Halbzeugs von dem biegeschlaffen Zustand (I) in einen formbaren Zustand (II) in Schritt b) erfolgt durch Zufuhr einer ersten Energiemenge $E_1$. So kann beispielsweise die Zufuhr der ersten Energiemenge $E_1$ die Aushärtungsreaktion, beispielsweise die Polymerisation, des duroplastischen oder thermoplastischen Materials des Halbzeugs auslösen oder vorantreiben. Auf diese Weise kann das Halbzeug von dem biegeschlaffen Zustand (I) in den formbaren Zustand (II) überführt werden. Insbesondere kann die erste Energiemenge $E_1$ dem Halbzeug beispielsweise in Form von Wärme zugeführt werden. Beispielsweise kann das Halbzeug in biegeschlaffem Zustand (I) durch die erste Energiemenge $E_1$ erhitzt werden. Unter einer "Energiemenge" ist grundsätzlich eine quantitativ oder qualitativ messbare Menge einer beliebigen Energieform, beispielsweise Wärme, zu verstehen. So kann die erste Energiemenge beispielsweise eine Heizleistung sein, welche benötigt wird, um das Halbzeug auf eine vorbestimmte Temperatur zu erhitzen oder zu erwärmen.

Unter "Überführen" ist im Rahmen der vorliegenden Erfindung grundsätzlich ein Voranschreiten der Aushärtungsreaktion, insbesondere der Vernetzung bei Duroplasten und Kettenbildung bei Thermoplasten, zu verstehen. Beispielsweise kann das Überführen, insbesondere das Voranschreiten der Reaktion, passiv, d.h. durch ledigliches Voranschreiten der Zeit, beispielsweise aufgrund von einer selbstständig ablaufenden Aushärtungsreaktion des duroplastischen oder thermoplastischen Materials, erfolgen. Alternativ oder zusätzlich kann das Überführen auch aktiv erfolgen, d.h. die Vernetzung kann insbesondere aktiv vorangetrieben werden. Beispielsweise kann ein aktives Überführen des Halbzeugs von einem Zustand in einen anderen Zustand, insbesondere ein aktives Vorantreiben der Polymerisation, beispielsweise eine Steigerung des Umsatzgrads, des Materials des Halbzeugs, durch Zuführen einer Energiemenge erreicht werden.

Unter einem "Halbzeug in einem formbaren Zustand" ist grundsätzlich ein beliebiges deformierbares und/oder umformbares Halbzeug zu verstehen. Das Halbzeug in dem formbaren Zustand (II), insbesondere das formbare Halbzeug, kann beispielsweise plastisch verformbar oder plastisch umformbar sein. Insbesondere kann ein plastisches Umformen des Halbzeugs in formbarem Zustand (II) ohne Zerstörung des Halbzeugs durchgeführt werden. So kann das formbare Halbzeug, insbesondere das duroplastische oder thermoplastische Material des Halbzeugs in dem formbaren Zustand, beispielsweise geformt werden ohne dabei zu brechen.

Das Halbzeug in dem formbaren Zustand (II) weist einen zweiten Umsatzgrad $p_2$ auf, wobei $p_2 > p_1$. Insbesondere kann der zweite Umsatzgrad $p_2$ beispielsweise unter dem Umsatzgrad eines Gelpunkts eines Reaktivkunststoff-Materials liegen, insbesondere kleiner sein. Unter einem "Gelpunkt" ist grundsätzlich ein Stadium, Zustand oder Punkt der Aushärtungsreaktion zu verstehen, in dem ein elastischer Anteil eines komplexen Schubmoduls einem viskosen Anteil des komplexen Schubmoduls gleicht. Insbesondere kann ein Speichermodul eines sich im Gelpunkt befindlichen Reaktivkunststoff-Materials genauso groß sein wie ein Verlustmodul. Der Gelpunkt der Aushärtungsreaktion kann beispielsweise einen Zustand oder ein Stadium charakterisieren in dem ein aushärtendes Material seine fließfähigen oder formbaren Eigenschaften verliert und sich nicht mehr ohne Materialschädigung verformen lässt.

In dem formbaren Zustand (II) kann das Halbzeug, insbesondere das Reaktivkunststoff-Material des Halbzeugs, zum Beispiel das Kunststoff-Material des Halbzeugs, beispielsweise eine Viskosität $\eta_2$ aufweisen. Die Viskosität $\eta_2$ des Reaktivkunststoff-Materials des formbaren Halbzeugs kann beispielsweise 100 mPa s $\leq \eta_2 \leq$ 100 000 mPa s, insbesondere 1000 mPa s $\leq \eta_2 \leq$ 80 000 mPa s, vorzugsweise 10 000 mPa s $\leq \eta_2 \leq$ 60 000 mPa s, sein. Der zweite Umsatzgrad $p_2$, insbesondere der Umsatzgrad des Halbzeugs in dem formbaren Zustand (II), kann beispielsweise 0 % < $p_2 \leq$ 50 %, insbesondere 5 % < $p_2 \leq$ 45 %, vorzugsweise 10 % < $p_2 \leq$ 40 %, sein. Beispielsweise kann das Halbzeug in dem formbaren Zustand (II) die Viskosität $\eta_2$ bei einer Verarbeitungstemperatur aufweisen, wobei die Verarbeitungstemperatur höher sein kann als eine Raumtemperatur, beispielsweise höher als 20 °C.

In Schritt c) wird dem Halbzeug, insbesondere dem Halbzeug in formbarem Zustand (II), die Geometrie des Formelements aufgeprägt. Während dieser Formgebung wird das Halbzeug beispielsweise von dem formbaren Zustand (II) in einen formstabilen Zustand (III) überführt. Unter einem "Halbzeug in einem formstabilen Zustand (III)" ist grundsätzlich ein beliebiges in seiner Form oder Geometrie beständiges Halbzeug zu verstehen. So kann das Halbzeug in dem formstabilen Zustand beispielsweise nicht mehr plastisch verformbar sein. Insbesondere kann das Halbzeug in dem formstabilen Zustand (III) einen Umsatzgrad oberhalb des Umsatzgrads des Gelpunkts aufweisen.

Unter "Aufprägen" ist grundsätzlich eine beliebige Formänderung durch Krafteinwirkung zu verstehen. Beispielsweise kann ein von einem Werkzeug, beispielsweise einer Matrize, einer Negativform oder einem Stempel, ausgeübter Druck und/oder Zug einem Halbzeug eine vorbestimmte Form, Gestalt oder Geometrie aufprägen. So kann beispielsweise das Material des Halbzeugs mit den darin eingebetteten Verstärkungsfasern dem Druck, insbesondere einem Druckprofil, des Werkzeugs nachgeben und so die Geometrie des Formelements aufgeprägt bekommen. Insbesondere kann das Aufprägen der Geometrie des Formelements beispielsweise ein Ablegen des Halbzeugs in eine Außenform, beispielsweise eine Außenform mit helikaler Nut oder ein Aufwickeln des Halbzeugs auf eine Innenform, beispielsweise eine Innenform mit helikaler Nut, umfassen.

Beispielsweise kann das formstabile Halbzeug mindestens eine elastische Eigenschaft aufweisen. So kann das formstabile Halbzeug beispielsweise bei einer Entlastung nach einer vorausgegangenen Verformung, beispielsweise nach einer durch äußere Last hervorgerufenen Verformung, wieder in seine Ausgangsform zurückkehren. Insbesondere kann das formstabile Halbzeug beispielsweise bei Entlastung nach einer vorausgegangenen Verformung wieder die während der Formgebung aufgeprägte Geometrie des Formelements einnehmen. So kann das formstabile Halbzeug beispielsweise zurückfedern. Alternativ oder zusätzlich kann eine Deformation, beispielsweise ein Umformen oder Verformen, des Halbzeugs in dem formstabilen Zustand (III) zu Materialschäden oder Brüchen führen.

In dem formstabilen Zustand (III) kann das Halbzeug, insbesondere das Reaktivkunststoff-Material des Halbzeugs, zum Beispiel das Kunststoff-Material des Halbzeugs, beispielsweise einen dritten Umsatzgrad $p_3$ aufweisen, wobei $p_3 > p_2$. Der dritte Umsatzgrad $p_3$, insbesondere der Umsatzgrad des Halbzeugs in dem formstabilen Zustand (III), kann beispielsweise 40 % < $p_3 \leq$ 90 %, insbesondere 45 % < $p_3 \leq$ 80 %, vorzugsweise 50 % < $p_3 \leq$ 70 %, sein.

In Schritt d) wird das Halbzeug von dem formstabilen Zustand (III) in einen biegesteifen Zustand (IV) überführt. Unter einem "Halbzeug in einem biegesteifen Zustand (IV)" ist grundsätzlich ein beliebiges gehärtetes Halbzeug zu verstehen. Insbesondere kann das Halbzeug in dem biegesteifen Zustand (IV), insbesondere das Reaktivkunststoff-Material des Halbzeugs, zum Beispiel das Kunststoff-Material des Halbzeugs, einen vierten Umsatzgrad $p_4$ aufweisen, wobei $p_4 > p_3$. Der vierte Umsatzgrad $p_4$, insbesondere der Umsatzgrad des Halbzeugs in dem biegesteifen Zustand (IV), kann beispielsweise 70 % < $P_4 \leq$ 100 %, insbesondere 80 % < $P_4 \leq$ 98 %, vorzugsweise 90 % < $P_4 \leq$ 95 %, sein. Das Halbzeug kann in dem biegesteifen Zustand (IV) beispielsweise eine nahezu vollständige Vernetzung aufweisen. Insbesondere kann das Halbzeug in dem biegesteifen Zustand (IV) eine für das gewählte Material maximale mechanische und thermische Stabilität aufweisen.

Das Verfahren zur Herstellung mindestens eines Formelements kann beispielsweise ein kontinuierliches Herstellungsverfahren umfassen. Insbesondere kann das Verfahren zur Herstellung beispielsweise eine kontinuierliche Herstellung mindestens eines Formelements aufweisen. Unter einem "kontinuierlichen" Herstellungsverfahren ist im Rahmen der vorliegenden Erfindung grundsätzlich ein beliebiges durchgehendes Verfahren zur Herstellung zu verstehen. Insbesondere kann es sich bei dem kontinuierlichen Herstellungsverfahren um ein durchgängiges Verfahren handeln, wobei Warte- oder Leerzeiten möglich sind. Beispielsweise können die Warte- und Leerzeiten in dem kontinuierlichen Herstellungsverfahren Anteile von 0 % bis einschließlich 30 %, insbesondere von 0 % bis 20 %, vorzugsweise von 0 % bis 10 %, einer Gesamtdauer des kontinuierlichen Herstellungsverfahrens ausmachen. Alternativ kann das kontinuierliche Herstellungsverfahren auch eine durchgängige Bearbeitungskette aufweisen, welche nicht durch Warte- oder Leerzeiten unterbrochen ist, d.h. Warte- und Leerzeiten können einen Anteil von 0 % der Gesamtdauer des kontinuierlichen Herstellungsverfahrens ausmachen. Insbesondere kann das kontinuierliche Herstellungsverfahren einen stetigen Herstellungsprozess aufweisen. So kann das kontinuierliche Herstellungsverfahren insbesondere eine ununterbrochene Fortdauer der Herstellung umfassen.

Insbesondere kann das Halbzeug, beispielsweise das in Schritt a) bereitgestellte Halbzeug, oberflächlich versiegelt sein. Insbesondere kann das Halbzeug beispielsweise mittels einer auf einer äußeren Oberfläche des Halbzeugs applizierten Folienschicht versiegelt sein. So kann beispielsweise eine äußere Schicht des Halbzeugs durch eine Folie gebildet werden.

Das Halbzeug in Schritt c) kann durch Zufuhr mindestens einer Energiemenge, beispielsweise einer zweiten Energiemenge, von dem formbaren Zustand (II) in den formstabilen Zustand (III) überführt werden. Insbesondere kann ein Überführen des Halbzeugs von dem formbaren Zustand (II) in den formstabilen Zustand (III) durch Zufuhr der zweiten Energiemenge geschehen. Beispielsweise kann die Polymerisation oder Vernetzungsreaktion des Halbzeugs, insbesondere die Aushärtungsreaktion des Kunststoff-Materials des Halbzeugs, durch Zufuhr der zweiten Energiemenge vorangetrieben werden, so dass das Halbzeug von dem formbaren Zustand (II) in den formstabilen Zustand (III) übergeht. Insbesondere kann ein Fortschreiten der Aushärtungsreaktion des Kunststoff-Materials des Halbzeugs durch die Zufuhr der zweiten Energiemenge beschleunigt werden.

Das Halbzeug in Schritt d) kann durch Zufuhr mindestens einer Energiemenge, beispielsweise einer dritten Energiemenge, von dem formstabilen Zustand (III) in den biegesteifen Zustand (IV) überführt werden. Insbesondere kann ein Überführen des Halbzeugs von dem formstabilen Zustand (III) in den biegesteifen Zustand (IV) durch Zufuhr der dritten Energiemenge geschehen. Beispielsweise kann die Polymerisation oder Vernetzungsreaktion des Halbzeugs, insbesondere die Aushärtungsreaktion des Kunststoff-Materials des Halbzeugs, durch Zufuhr der dritten Energiemenge vorangetrieben werden, so dass das Halbzeug von dem formstabilen Zustand (III) in den biegesteifen Zustand (IV) übergeht. Insbesondere kann ein Fortschreiten der Aushärtungsreaktion des Kunststoff-Materials des Halbzeugs durch die Zufuhr der dritten Energiemenge beschleunigt werden.

Die Energiemenge, insbesondere die erste Energiemenge und/oder die zweite Energiemenge und/oder die dritte Energiemenge, kann dem Halbzeug insbesondere durch eines oder mehreres von Konvektion, Strahlung und Induktion zugeführt werden. So kann dem Halbzeug zur Überführung von dem biegeschlaffen Zustand (I) in den formbaren Zustand (II) in Schritt b) die erste Energiemenge beispielsweise durch Konvektion, Strahlung, Induktion oder einer beliebigen Kombination daraus zugeführt werden. Zudem kann dem Halbzeug auch zur Überführung von dem formbaren Zustand (II) in den formstabilen Zustand (III) in Schritt c) die zweite Energiemenge beispielsweise durch Konvektion, Strahlung, Induktion oder einer beliebigen Kombination daraus zugeführt werden. Alternativ oder zusätzlich kann dem Halbzeug auch zur Überführung von dem formstabilen Zustand (III) in den biegesteifen Zustand (IV) in Schritt d) die dritte Energiemenge beispielsweise durch Konvektion, Strahlung, Induktion oder einer beliebigen Kombination daraus zugeführt werden. So kann die Energiemenge, insbesondere die erste Energiemenge und/oder die zweite Energiemenge und/oder die dritte Energiemenge, dem Halbzeug beispielsweise mittels eines Gases, eines Dampfs oder einer Flüssigkeit zugeführt werden. Insbesondere kann die dem Halbzeug zugeführte Energiemenge, insbesondere die erste Energiemenge und/oder die zweite Energiemenge und/oder die dritte Energiemenge, beispielsweise eine Wärmemenge sein. So kann die Energiemenge, insbesondere die erste Energiemenge und/oder die zweite Energiemenge und/oder die dritte Energiemenge, dem Halbzeug beispielsweise mittels einer Wärmestrahlung, insbesondere durch Infrarot oder hochfrequenten elektromagnetischen Wellen, beispielsweise durch hochfrequente Radiowellen, zugeführt werden.

Insbesondere können die Energiemengen, beispielsweise die erste Energiemenge und/oder die zweite Energiemenge und/oder die dritte Energiemenge, durch unterschiedliche Übertragungsmechanismen, d.h. durch Konvektion und/oder Strahlung und/oder Induktion, übertragen werden, insbesondere dem Halbzeug zugeführt werden. Beispielsweise kann die erste Energiemenge durch einen anderen Übertragungsmechanismus übertragen werden als die zweite und/oder dritte Energiemenge. Beispielsweise können sich auch die Übertragungsmechanismen der zweiten und dritten Energiemenge unterscheiden. Alternativ, können die Energiemengen, insbesondere die erste Energiemenge und/oder die zweite Energiemenge und/oder die dritte Energiemenge, auch durch denselben Übertragungsmechanismus oder dieselben Übertragungsmechanismen übertragen werden.

Die Energiemengen, insbesondere die erste Energiemenge und/oder die zweite Energiemenge und/oder die dritte Energiemenge, können sich weiterhin in ihrer Größe, d.h. in ihrer Menge, unterscheiden. Beispielsweise können die erste Energiemenge und/oder die zweite Energiemenge und/oder die dritte Energiemenge unterschiedlich groß sein. Alternativ können die Energiemengen, insbesondere die erste Energiemenge und/oder die zweite Energiemenge und/oder die dritte Energiemenge, auch gleich groß sein.

Die Energiemenge, insbesondere die erste Energiemenge und/oder die zweite Energiemenge und/oder die dritte Energiemenge, kann dem Halbzeug beispielsweise in einem Ölbad, d.h. durch Konvektion, zugeführt werden. Insbesondere kann das Halbzeug durch ein mit warmem oder heißem Öl gefülltes Becken oder eine Wanne geführt werden, um dem Halbzeug die Energiemenge zuzuführen.

Das in Schritt a) bereitgestellte Halbzeug kann eine Ausgangsform aufweisen, wobei die Ausgangsform ausgewählt sein kann aus der Gruppe bestehend aus: einem Strang, insbesondere einem Strangprofil; einem Stab; einem Rohr; einer Platte; einem Endlosprofil, einer Endlosplatte. So kann das in Schritt a) bereitgestellte Halbzeug beispielsweise eine langgestreckte Ausgangsform aufweisen. Insbesondere kann die Ausgangsform des Halbzeugs beispielsweise eine Längsausdehnung oder flächige Ausdehnung aufweisen. Die Ausgangsform des Halbzeugs kann beispielsweise ein kreisförmiges oder ovales, Hohl- oder Vollprofil aufweisen.

Das in Schritt a) bereitgestellte Halbzeug kann insbesondere mittels Filamentwinding, Pultrusion oder Pullwinding oder Prepregverfahren, beispielsweise in sogenannten Prepreg-Maschinen, hergestellt sein. So kann die Ausgangsform des Halbzeugs beispielsweise eine für diese Herstellungsart typische Form aufweisen.

Die Formgebung des Halbzeugs in Schritt c) kann ein Umformen, beispielsweise ein Erzeugen, eines Profils des Halbzeugs umfassen. Insbesondere kann das Profil des Halbzeugs beispielsweise in Schritt c) beispielsweise in eine vorbestimmte Form gebracht werden. Unter einem "Profil des Halbzeugs" kann grundsätzlich eine beliebige Form oder Geometrie eines Querschnitts, insbesondere eines Querschnitts einer Längsseite des Halbzeugs, verstanden werden. So kann das Profil eines rohrförmigen Halbzeugs beispielsweise ein Kreis oder ein Kreisring sein. In Schritt c) kann das Halbzeug beispielsweise derart geformt werden, dass das Halbzeug nach der Formgebung ein Profil, insbesondere ein vorbestimmtes definiertes Profil, beispielsweise eine definierte Qualität, aufweist.

Das Formen des Halbzeugs in Schritt c) kann ein Krümmen des Halbzeugs um mindestens eine Achse umfassen. Insbesondere kann das Halbzeug in Schritt c) um mindestens eine Achse gekrümmt werden. So kann das Halbzeug nach der Formgebung in Schritt c) beispielsweise mindestens eine Krümmung aufweisen. Insbesondere kann das gekrümmte Halbzeug beispielsweis mindestens einen Krümmungsradius $R_k$ aufweisen. Beispielsweise kann 1 cm < $R_k$ ≤ 100 cm sein. Insbesondere kann 2 cm ≤ $R_k$ ≤ 50 cm sein. Vorzugsweise kann 3 cm ≤ $R_k$ ≤ 20 cm sein.

Das Halbzeug kann in Schritt c) in eine Helix- oder Spiralform geformt werden. Insbesondere kann das Formen des Halbzeugs in Schritt c) ein Formen des Halbzeugs in eine Helix- oder Spiralform umfassen. Unter einer "Helix- oder Spiralform" wird grundsätzlich eine beliebige schraubenförmige sich um eine Achse windende Geometrie verstanden, wobei sowohl eine Steigung als auch ein Radius variabel sein können. Insbesondere kann das in die Helix- oder Spiralform gebrachte Halbzeug zumindest teilweise die Form einer Schraubenfeder aufweisen.

Das Halbzeug in Schritt c) kann kontinuierlich oder segmentweise geformt werden. Insbesondere kann das Halbzeug in Schritt c) kontinuierlich, beispielsweise durchgängig oder stetig, geformt werden. So kann beispielsweise ein ununterbrochenes Formen des Halbzeugs stattfinden. Zum Beispiel kann Schritt c) eine ununterbrochene Fortdauer des Formens des Halbzeugs umfassen. Alternativ oder zusätzlich kann das Halbzeug in Schritt c) segmentweise, insbesondere abschnittsweise, geformt werden.

Das Verfahren kann weiterhin eine Änderung einer räumlichen Lage des Halbzeugs mittels mindestens einer Bewegungseinheit umfassen. Insbesondere kann das Halbzeug beispielsweise mit mindestens einer Bewegungseinheit räumlich bewegt werden. Die Bewegungseinheit kann beispielsweise eingerichtet sein, um das Halbzeug durch Zug und/oder Druck zu bewegen. Die Bewegungseinheit kann mindestens ein Element umfassen ausgewählt aus der Gruppe bestehend aus: einer Rolle, insbesondere einer Kombination von Rollen; einer Förderkette; einem Förderband; einem Klemmantrieb. Insbesondere kann die Bewegungseinheit eingerichtet sein mittels des mindestens einen Elements eine räumliche Bewegung des Halbzeugs zu bewirken. Beispielsweise kann der Klemmantrieb eine Einrichtung sein bei der ein Werkstück, insbesondere das Halbzeug, schrittweise gezogen werden kann.

Insbesondere kann das Halbzeug mittels des Klemmantriebs schrittweise gezogen werden, indem mindestens ein Greifer das Halbzeug in einer Ausgangsposition greifen oder fassen kann, das Halbzeug dann durch eine Bewegung des mindestens einen Greifers in die Bewegungsrichtung des Greifers zu einer neuen Position gezogen werden kann und durch ein Lösen des Greifers in dieser Position liegen bleiben kann. Der Greifer kann sich anschließend beispielsweise wieder in seine Ausgangsposition zurückbewegen und das Halbzeug an einer nächsten Stelle greifen oder fassen. Auf diese Weise kann das Halbzeug beispielsweise durch ein Wiederholen der Abfolge von Greifen, Bewegen und Loslassen schrittweise bewegt oder gezogen werden.

Das Halbzeug kann in Schritt c) beispielsweise mittels mindestens einer Formgebeeinheit geformt werden. Insbesondere kann die Formgebeeinheit eingerichtet sein, um dem Halbzeug die Geometrie des Formelements aufzuprägen. Insbesondere kann die Formgebeeinheit eine Negativform des Formelements aufweisen.

Die Formgebeeinheit kann beispielsweise in die Bewegungseinheit integriert sein. So können die Formgebeeinheit und die Bewegungseinheit insbesondere integral ausgestaltet sein.

Die Formgebeeinheit kann mindestens ein Element umfassen ausgewählt aus der Gruppe bestehend aus: einer Matrize; einer Außenform, insbesondere einer Außenform mit helikaler Nut, einer Außenform mit beweglicher Kontaktfläche oder mit unbeweglicher, glatter und gleitfähiger Kontaktfläche; einer Innenform, insbesondere einer Innenform mit helikaler Nut; einer Rolle; einer Öffnung.

Schritt c), insbesondere das Formen des Halbzeugs in Schritt c), kann ein Relativbewegen des Halbzeugs und der Formgebeeinheit umfassen. So kann dem Halbzeug beispielsweise durch eine Relativbewegung zwischen der Formgebeeinheit und dem Halbzeug die Geometrie des Formelements aufgeprägt werden. Insbesondere kann das kontinuierliche Formen des Halbzeugs beispielsweise durch eine gleichbleibende Relativgeschwindigkeit zwischen Formgebeeinheit und Halbzeug charakterisiert sein. Alternativ oder zusätzlich kann ein segmentweises Formen des Halbzeugs beispielsweise durch eine veränderliche Relativgeschwindigkeit zwischen Formgebeeinheit und Halbzeug charakterisiert sein.

Das Verfahren kann weiterhin mindestens einen Steuerungsschritt e) aufweisen. Der Steuerungsschritt e) kann beispielsweise die folgenden Teilschritte umfassen:

e1) Bestimmen des Umsatzgrads und/oder einer Umformbarkeit des Halbzeugs; und

e2) Regeln einer Geschwindigkeit des Halbzeugs und/oder einer Energiezufuhr.

Der Steuerungsschritt kann insbesondere parallel oder gleichzeitig zu einem oder mehreren Verfahrensschritten des Verfahrens zur Herstellung mindestens eines Formelements durchgeführt werden. Beispielsweise kann der Steuerungsschritt wiederholt, beispielsweise mehrfach wiederholt, durchgeführt werden. Insbesondere kann der Steuerungsschritt beispielsweise auch in einen oder mehrere Schritte des Verfahrens zur Herstellung mindestens eines Formelements integriert sein. So kann der Steuerungsschritt insbesondere in einen oder beide der Schritte b) und c) integriert sein. Alternativ oder zusätzlich kann der Steuerungsschritt beispielsweise in einen oder mehrere Schritte des Verfahrens zur Herstellung mindestens eines Formelements eingreifen. Insbesondere kann der Steuerungsschritt beispielsweise in einen oder beide der Schritte b) und c) eingreifen.

Insbesondere kann der Umsatzgrad in Schritt e1) beispielsweise entweder indirekt über die mechanische Steifigkeit des Halbzeugs oder über Ultraschall oder Oberflächentemperatur bestimmt werden Beispielsweise kann der Umsatzgrad in Schritt e1) auch indirekt über eine Wärmebilanz bestimmt werden, beispielsweise über eine Wärmedifferenz zwischen dem Halbzeug in biegeschlaffem Zustand (I) und in formbarem Zustand (II), und/oder über eine freigesetzte Reaktionsenthalpie.

Unter einer "Umformbarkeit" ist grundsätzlich die Fähigkeit eines beliebigen Elements zu verstehen, seine Form zu verändern. So kann ein hartes oder festes Element eine niedrige Umformbarkeit aufweisen, wohingegen ein weiches oder nachgiebiges Element eine hohe Umformbarkeit aufweisen kann. Unter einem "Bestimmen einer Umformbarkeit des Halbzeugs" ist im Rahmen der vorliegenden Erfindung grundsätzlich ein Ermitteln mindestens einer Härte oder Widerstandskraft des Halbzeugs zu verstehen. So kann die Umformbarkeit des Halbzeugs beispielsweise durch Ermitteln, insbesondere durch Messen, einer Oberflächenhärte des Halbzeugs bestimmt werden. Alternativ oder zusätzlich kann die Umformbarkeit des Halbzeugs auch durch ein Bestimmen einer Widerstandskraft ermittelt werden, beispielsweise einer Kraftgröße welche für ein Umformen oder Deformieren des Halbzeugs mindestens notwendig ist.

Das Regeln der Geschwindigkeit des Halbzeugs und/oder der Energiezufuhr in Schritt e2) kann beispielsweise ein Anpassen der Geschwindigkeit des Halbzeugs und/oder der Energiezufuhr zu dem Halbzeug umfassen, insbesondere kann das Regeln, zum Beispiel durch das Anpassen den Umsatzgrad oder die Umformbarkeit regeln und/oder zumindest beeinflussen. So kann der Umsatzgrad oder die Umformbarkeit beispielsweise über eine Abzugsgeschwindigkeit und oder eine Höhe der Energiemenge, insbesondere der Energiezufuhr, geregelt sein.

Der Steuerungsschritt e) kann beispielsweise vor dem Formen in Schritt c) durchgeführt werden. So kann insbesondere das Bestimmen des Umsatzgrads in Schritt e1) vor dem Formen in Schritt c) durchgeführt werden.

Beispielsweise kann für den Fall, dass der Umsatzgrad das Halbzeugs in Schritt c) zu hoch ist, insbesondere größer ist als ein vorgegebener Wert oder ein vorgegebener Bereich, und/oder die Umformbarkeit das Halbzeugs in Schritt c) nicht ausreichend groß ist, insbesondere kleiner ist als ein vorgegebener Wert oder ein vorgegebener Bereich, die zugeführte erste Energiemenge, beispielsweise eine Energiezufuhr, in Schritt b) gedrosselt werden. Alternativ oder zusätzlich kann für den Fall, dass der Umsatzgrad das Halbzeugs in Schritt c) zu hoch ist, insbesondere größer ist als ein vorgegebener Wert oder ein vorgegebener Bereich, und/oder die Umformbarkeit das Halbzeugs in Schritt c) nicht ausreichend groß ist, insbesondere kleiner ist als ein vorgegebener Wert oder ein vorgegebener Bereich, die Geschwindigkeit des Halbzeugs, beispielsweise die Abzugsgeschwindigkeit und/oder eine Zuführgeschwindigkeit, erhöht werden.

Beispielsweise kann für den Fall, dass der Umsatzgrad das Halbzeugs in Schritt c) zu niedrig ist, insbesondere geringer ist als ein vorgegebener Wert oder ein vorgegebener Bereich, und/oder die Umformbarkeit das Halbzeugs in Schritt c) zu groß ist, insbesondere größer ist als ein vorgegebener Wert oder ein vorgegebener Bereich, die zugeführte erste Energiemenge in Schritt b) erhöht werden.

Insbesondere kann beispielsweise der Schritt e2) genau dann ausgeführt werden, wenn zum Beispiel das Halbzeug nach Durchführen des Schritts b) nicht den formbaren Zustand (II) aufweist und/oder wenn das Halbzeug nach Durchführen des Schritts c) nicht den formstabilen Zustand (III) aufweist. So kann Schritt e2) beispielsweise ein Erhöhen der ersten Energiemenge in Schritt b) und/oder eine Reduzierung der Geschwindigkeit des Halbzeugs umfassen, falls das Halbzeug nach Durchführen des Schritts c) weiterhin den formbaren Zustand (II) aufweist. Schritt e2) kann beispielsweise ein erniedrigen oder verringern der ersten Energiemenge in Schritt b) und/oder eine Erhöhung der Geschwindigkeit des Halbzeugs umfassen, falls das Halbzeug nach durchführen des Schritts b) beispielsweise bereits den formstabilen Zustand (III) oder den biegesteifen Zustand (IV) aufweist.

In einem weiteren Aspekt wird ein Formelement vorgeschlagen, wobei das Formelement hergestellt ist durch ein erfindungsgemäßes Verfahren zur Herstellung mindestens eines Formelements nach einer der oben ausgeführten oder unten näher erläuterten Ausführungsformen. Dementsprechend kann für Definitionen und optionale Ausgestaltungen auf die Beschreibung des erfindungsgemäßen Verfahrens verwiesen werden.

In einem weiteren Aspekt wird ein Computerprogramm umfassend computerausführbare Anweisungen zur Durchführung eines Steuerungsschritts vorgeschlagen, wobei der Steuerungsschritt zur Regelung des Umsatzgrades auf der Bestimmung eines Umsatzgrads und/oder einer Umformbarkeit eines Halbzeugs, beispielsweise als Eingangsgröße, aufbauen kann, wobei der Steuerungsschritt weiterhin ein Anpassen einer Geschwindigkeit des Halbzeugs und/oder einer Energiezufuhr zu dem Halbzeug umfasst.

Weiterhin wird ein elektronisches Speichermedium, beispielsweise ein Datenträger, vorgeschlagen, auf welchem ein solches Computerprogramm gespeichert ist. Insbesondere kann auf dem Datenträger eine Datenstruktur gespeichert sein, die nach einem Laden in einen Arbeits- und/oder Hauptspeicher eines Computers oder Computer-Netzwerkes den Steuerungsschritt ausführen kann. Weiterhin wird ein elektronisches Steuergerät vorgeschlagen, welches ein solches elektronisches Speichermedium umfasst.

In einem weiteren Aspekt wird eine Vorrichtung zum Herstellen von Formelementen vorgeschlagen. Die Vorrichtung umfasst:

- mindestens eine Formgebeeinheit;
- mindestens eine Bewegungseinheit; und
- mindestens eine Energiezuführeinheit,

wobei die Vorrichtung eingerichtet ist, um ein Halbzeug von einem biegeschlaffen Zustand (I) in einen biegesteifen Zustand (IV) zu überführen, wobei das Halbzeug in dem biegeschlaffen Zustand (I) einen ersten Umsatzgrad aufweist, wobei das Halbzeug in einem formbaren Zustand (II) einen zweiten Umsatzgrad aufweist, wobei der erste Umsatzgrad geringer ist als der zweite Umsatzgrad, wobei das Halbzeug ein Reaktivkunststoff-Material und Verstärkungsfasern aufweist, wobei die Verstärkungsfasern zumindest teilweise in das Reaktivkunststoff-Material eingebettet sind.

Unter einer "Formgebeeinheit" ist im Rahmen der vorliegenden Erfindung grundsätzlich eine beliebige Vorrichtung zu verstehen die eingerichtet ist, um einem beliebigen Element eine vorbestimmte Form, Gestalt oder Geometrie zu übertragen oder aufzuprägen. Insbesondere kann die Formgebeeinheit eingerichtet sein, um dem Halbzeug eine Geometrie des Formelements aufzuprägen. Insbesondere kann die Formgebeeinheit eine Negativform des Formelements aufweisen. Beispielsweise kann die Formgebeeinheit ein Werkzeug umfassen.

Insbesondere kann es sich bei der Formgebeeinheit um die weiter oben erwähnte Formgebeeinheit handeln, welche in dem Verfahren zur Herstellung von Formelementen zum Formen des Halbzeugs in Schritt c) verwendet werden kann.

Unter einer "Bewegungseinheit" ist im Rahmen der vorliegenden Erfindung grundsätzlich eine beliebige Vorrichtung zu verstehen die eingerichtet ist, um ein beliebiges Element räumlich zu bewegen. Insbesondere kann die Bewegungseinheit eingerichtet sein, um das Halbzeug räumlich zu bewegen. Beispielsweise kann die Bewegungseinheit das Halbzeug durch Zug und/oder Druck bewegen.

Insbesondere kann es sich bei der Bewegungseinheit um die weiter oben erwähnte Bewegungseinheit handeln, welche in dem Verfahren zur Herstellung von Formelementen verwendet werden kann.

Unter einer "Energiezuführeinheit" ist im Rahmen der vorliegenden Erfindung grundsätzlich eine beliebige Vorrichtung zu verstehen welche eingerichtet ist, um einem beliebigen Element Energie zuzuführen. Insbesondere kann die Energiezuführeinheit eingerichtet sein, um dem Halbzeug Energie zuzuführen, beispielsweise eine weiter oben erwähnte Energiemenge, insbesondere die erste Energiemenge und/oder die zweite Energiemenge und/oder die dritte Energiemenge. So kann die Energiezuführeinheit beispielsweise eingerichtet sein, um dem Halbzeug die Energiemenge, insbesondere die erste Energiemenge und/oder die zweite Energiemenge und/oder die dritte Energiemenge, durch Konvektion und/oder Strahlung und/oder Induktion zuzuführen.

Beispielsweise kann die Energiezuführeinheit ein Heizbad, insbesondere ein Ölbad, oder einen Heizofen aufweisen. Insbesondere kann die Energiezuführeinheit beispielsweise eine Durchlaufstrecke aufweisen, insbesondere eine Durchlaufstrecke welche das Halbzeug durchläuft, wobei dem Halbzeug während des Durchlaufens der Durchlaufstrecke die Energiemenge zugeführt werden kann, insbesondere die erste Energiemenge und/oder die zweite Energiemenge und/oder die dritte Energiemenge.

Die Vorrichtung zum Herstellen von Formelementen kann weiterhin mindestens eine Steuereinheit aufweisen. Unter einer "Steuereinheit" ist im Rahmen der vorliegenden Erfindung grundsätzlich eine beliebige Vorrichtung zu verstehen die eingerichtet ist, um ein beliebiges Verfahren, insbesondere mindestens einen Schritt oder Teilschritt des Verfahrens, zu kontrollieren, zu betreiben und/oder zu leiten. Die Steuereinheit kann beispielsweise eingerichtet sein, um einen Steuerungsschritt durchzuführen. Die Steuerung kann insbesondere auf der Bestimmung eines Umsatzgrads eines Halbzeugs aufbauen bzw. diese inkludieren. Der Steuerungsschritt kann beispielsweise ein Bestimmen einer Umformbarkeit eines Halbzeugs umfassen. So kann der Steuerungsschritt, insbesondere das Bestimmen des Umsatzgrads und/oder der Umformbarkeit des Halbzeugs, beispielsweise ein Messen des Umsatzgrads und/oder der Umformbarkeit des Halbzeugs umfassen, d. h. einen Mess-Schritt aufweisen. Weiterhin kann der Steuerungsschritt beispielsweise ein Anpassen einer Geschwindigkeit des Halbzeugs und/oder einer Energiezufuhr zu dem Halbzeug umfassen.

Insbesondere kann es sich bei dem Steuerungsschritt beispielsweise um den weiter oben erwähnten Steuerungsschritt handeln, welcher Teil des Verfahrens zur Herstellung von Formelementen sein kann. So kann die Steuereinheit insbesondere eingerichtet sein, um den Steuerungsschritt durchzuführen, insbesondere parallel oder gleichzeitig zu einem oder mehreren weiteren Schritten des Verfahrens zur Herstellung mindestens eines Formelements. Beispielsweise kann der Steuerungsschritt wiederholt, beispielsweise mehrfach wiederholt, durchgeführt werden. Insbesondere kann die Steuereinheit eingerichtet sein, um den Steuerungsschritt beispielsweise in einen oder mehrere Schritte des Verfahrens zur Herstellung mindestens eines Formelements, zum Beispiel in einen oder beide der Schritte b) und c), zu integrieren. Alternativ oder zusätzlich kann die Steuereinheit eingerichtet sein, um den Steuerungsschritt beispielsweise derart durchzuführen, dass der Steuerungsschritt in einen oder mehrere Schritte des Verfahrens zur Herstellung mindestens eines Formelements, beispielsweise in einen oder beide der Schritte b) und c), eingreifen kann.

Beispielsweise kann die Steuereinheit weiterhin mindestens einen Speicher umfassen. So kann die Steuereinheit beispielsweise eine Festplatte umfassen. Insbesondere kann die Steuereinheit eingerichtet sein, um mindestens einen Steuerungsparameter in dem Speicher zu speichern. So kann die Steuereinheit beispielsweise eingerichtet sein, um den mindestens einen Steuerungsparameter auf der Festplatte zu speichern. Unter einem "Steuerungsparameter" ist grundsätzlich eine beliebige Information einer Einstellung der Steuereinheit zu verstehen. Der Steuerungsparameter kann insbesondere Informationen über eine dem Halbzeug zugeführte Energiemenge, insbesondere Informationen über die erste Energiemenge und/oder die zweite Energiemenge und/oder die dritte Energiemenge, umfassen. Weiterhin kann der Steuerungsparameter beispielsweise Informationen zu einer Geschwindigkeit des Halbzeugs umfassen. Insbesondere kann der Steuerungsparameter auch Einstellungen der Formgebeeinheit und/oder der Bewegungseinheit umfassen.

Die Vorrichtung zum Herstellen von Formelementen kann weiterhin beispielsweise eine Schneidevorrichtung zum Abtrennen des Formelements aufweisen. Insbesondere kann die Schneidevorrichtung mindestens eine Abtrenneinheit, beispielsweise eine Schere, eine Säge, einen Schleifer, insbesondere einen Winkelschleifer, oder eine ähnliche Einrichtung, aufweisen.

Die Vorrichtung zum Herstellen von Formelementen kann beispielsweise eingerichtet sein, um zumindest Schritte b) bis d) eines Verfahrens zur Herstellung mindestens eines Formelements nach einer der oben ausgeführten oder unten näher erläuterten Ausführungsformen auszuführen. Dementsprechend kann für Definitionen und optionale Ausgestaltungen auf die Beschreibung des erfindungsgemäßen Verfahrens verwiesen werden.

Das erfindungsgemäße Verfahren zur Herstellung mindestens eines Formelements, das Formelement, das Computerprogramm sowie die Vorrichtung zum Herstellen von Formelementen weisen gegenüber herkömmlichen Verfahren und Vorrichtungen zahlreiche Vorteile auf. So kann es möglich sein, durch die erfindungsgemäßen Verfahren und Vorrichtungen Formelemente, beispielsweise Formteile, aus faserverstärktem Reaktivkunststoff-Material schneller herzustellen als bei herkömmlichen Verfahren und Vorrichtungen. Insbesondere können die Herstellungs- oder Produktionszeiten beispielsweise durch eine 5 bis 20-fache Verkürzung von Haltezeiten erreicht werden, insbesondere von Formhaltezeiten, beispielsweise Zeiten in denen das Halbzeug in Form gehalten werden muss, weil zum Beispiel die zeitaufwendige Energiezufuhr und/oder das Anlaufen der Polymerisationsreaktion teilweise oder vollständig vor dem eigentlichen formgebenden Prozess ablaufen. Eine Reduktion der benötigten Produktionszeit kann zu einer deutlichen Einsparung von Kosten führen.

Weiterhin können die erfindungsgemäßen Verfahren und Vorrichtungen im Vergleich zu herkömmlichen Verfahren und Vorrichtungen umweltfreundlicher sein. Insbesondere kann der Prozess z.B. Energieverbräuche senken, da z.B. die Energiezufuhr aus einem Ölbad für das Aufwärmen eines Halbzeuges durch die z.T. danach vom Halbzeug in das Ölbad abgegebene Wärme aus der Reaktionsenthalpie ausgeglichen werden kann, was den Energiebedarf des Prozesses deutlich reduzieren kann.

Zudem kann es möglich sein, dass durch die erfindungsgemäßen Verfahren und Vorrichtungen Formelemente aus faserverstärktem Reaktivkunststoff-Material mit einer hohen Designfreiheit hergestellt werden können. Insbesondere kann beispielsweise auf teure angepasste Formen verzichtet werden. So können beispielsweise Kosten und Lagerplatz gespart werden, da es für unterschiedliche Designs beispielsweise ausreichen kann, Steuerungsparameter zu speichern. Zudem kann bei den erfindungsgemäßen Verfahren und Vorrichtungen beispielsweise im Vergleich zu herkömmlichen Verfahren und Vorrichtungen, insbesondere im Vergleich zu Verfahren und Vorrichtungen metallischer Formteile, auf große Anlagen verzichtet werden. So können die erfindungsgemäßen Vorrichtungen und Verfahren beispielsweise bei der Formgebung, insbesondere dem Formen von Halbzeugen, niedrigere Kräfte benötigt werden, als in der Formgebung von Metallteilen welche durch herkömmliche Verfahren und Vorrichtungen hergestellt sind. Insbesondere können durch erfindungsgemäße Verfahren und Vorrichtungen hergestellte Federn, beispielsweise Federn zur Anwendung in Fahrzeugen, weniger Kraft in der Herstellung benötigt werden, als bei der Herstellung von metallischen Federn, insbesondere metallischen Federn zur Anwendung in Fahrzeugen.

Zum Beispiel können ein 10 mm dicker kreisförmiger Metalldraht und ein 18 mm dicker Compositedraht, beispielsweise ein Draht aus ausgehärtetem Reaktivkunststoff mit darin eingebetteten Verstärkungsfasern, ähnliche Torsionskräfte aufnehmen. Die Umformung beispielsweise des weiter unten beschriebenen Compositedrahtes kann insbesondere mit einer Kraft von 22 N erfolgen. Die Umformung eines vergleichbaren Metalldrahtes könnte beispielsweise eine Kraft von ca. 60000 N erfordern, d.h. beispielsweise, dass einer Gewichtskraft von ca. 2 kg in dem vorliegenden Beispiel eine Gewichtskraft von 6 t gegenüber stehen kann. So können beispielsweise Metallumform-Maschinen, insbesondere für Fahrzeug-Metallschraubenfedern, sehr stabil gebaut sein und mehrere Tonnen wiegen, während eine Anlage nach dem vorgeschlagenen Verfahren viel leichter gebaut werden kann.

Beispielsweise können die erfindungsgemäßen Verfahren und Vorrichtungen genauer und sicherer sein als herkömmliche Verfahren und Vorrichtungen. Insbesondere kann beispielsweise eine computergesteuerte, auf ein Modell gestützte, insbesondere modellunterstützte, Herstellung von Formelementen mittels der erfindungsgemäßen Verfahren und Vorrichtungen sicherer sein als herkömmliche Verfahren. Insbesondere können die auf diese Weise gesteuerte Erwärmung und Umformung des kontinuierlich oder sequentiellen, beispielsweise quasikontinuierlich, bewegten Halbzeuges der erfindungsgemäßen Verfahren und Vorrichtungen eine sicherere, beispielsweise auch segmentweise unterschiedliche, Verformung in einem engen Verarbeitungszeitfenster ermöglichen. Beispielsweise können die vorgeschlagenen Vorrichtungen und Verfahren, insbesondere diese neue Technologie, das Urformen von endlosfaserverstärkten Strangprofilen ermöglichen und beschleunigen, zum Beispiel für die Fertigung von Schraubenfedern aus Faserverbundwerkstoff.

Die erfindungsgemäßen Verfahren und Vorrichtungen können es beispielsweise ermöglichen Nachteile herkömmlicher Verfahren und Vorrichtungen zu überwinden. Beispielsweise kann in herkömmlichen Verfahren das Prägen eines endlosfaserverstärkten Reaktivkunststoff-Materials zu seiner geometrischen Gestalt in der Regel diskontinuierlich in einer festen beheizten Form geschehen. Ein Umformen von Reaktivkunststoff-Materialien kann insbesondere zu Beginn der Polymerisation schwierig sein, da die faserverstärkten Materialien zu weich sein können, um eine aufgeprägte Geometrie zu behalten, und es ohne umschließende Form auch zum Auslaufen des Reaktivkunststoffs aus den Fasern kommen könnte. Beispielsweise kann ein Umformen am Ende der Polymerisation schwierig sein, da das Material so hart ist, dass es beim Aufprägen einer neuen Geometrie brechen kann. In einem quasikontinuierlichen Prozess kann das bedeuten, dass einem definierten Segment eines Halbzeuges eine Form so lange aufgeprägt werden sollte, bis es hart ist, um dieses Segment dann frei zu geben und das nächste Segment zu formen. In einem kontinuierlichen Prozess können diese Segmente zum Beispiel inkrementell klein sein und Transport, Umformung und Entformung können beispielsweise kontinuierlich erfolgen.

Beispielsweise kann ein Fortschreiten der Vernetzungsreaktion, insbesondere einer sich durch eine Erwärmung beschleunigenden Reaktion, begünstigt werden von einer Wärmekapazität des Kunststoff-Materials und der Fasern zum Speichern einer freiwerdenden Reaktionswärme in Kombination mit einer schlechten Wärmeleitfähigkeit von Kunststoffen, die beispielsweise ein schnelles Abkühlen verhindern können. So wurden in Experimenten, die beispielsweise ganz oder teilweise analog zu dem unten aufgeführten Versuch verliefen, nach dem Verlassen eines 150°C heißen Ölbades im GFK-Bauteil durch die fortlaufende Reaktion später maximale Temperaturen von bis zu 175°C gemessen.

Zusammenfassend werden, ohne Beschränkung weiterer möglicher Ausgestaltungen, folgende Ausführungsformen vorgeschlagen:

Ausführungsform 1: Verfahren zur Herstellung mindestens eines Formelements, wobei das Formelement eine Geometrie aufweist, wobei das Verfahren die folgenden Schritte umfasst:

a) Bereitstellen eines Halbzeugs in einem biegeschlaffen Zustand (I), wobei das Halbzeug ein Reaktivkunststoff-Material und Verstärkungsfasern aufweist, wobei die Verstärkungsfasern zumindest teilweise in das Reaktivkunststoff-Material eingebettet sind;

b) Überführen des Halbzeugs von dem biegeschlaffen Zustand (I) in einen formbaren Zustand (II) durch Zufuhr einer ersten Energiemenge, wobei das Halbzeug in dem biegeschlaffen Zustand (I) einen ersten Umsatzgrad aufweist, wobei das Halbzeug in einem formbaren Zustand (II) einen zweiten Umsatzgrad aufweist, wobei der erste Umsatzgrad geringer ist als der zweite Umsatzgrad;

c) Formen des Halbzeugs, wobei dem Halbzeug die Geometrie des Formelements aufgeprägt wird, wobei das Halbzeug während der Formgebung von dem formbaren Zustand (II) in einen formstabilen Zustand (III) überführt wird; und

d) Überführen des Halbzeugs von dem formstabilen Zustand (III) in einen biegesteifen Zustand (IV).

Ausführungsform 2: Verfahren nach der vorhergehenden Ausführungsform, wobei das Verfahren zur Herstellung mindestens eines Formelements ein kontinuierliches Herstellungsverfahren umfasst.

Ausführungsform 3: Verfahren nach einer der vorhergehenden Ausführungsformen, wobei das Halbzeug oberflächlich versiegelt ist, insbesondere mittels einer auf eine äußere Oberfläche applizierten Folienschicht.

Ausführungsform 4: Verfahren nach einer der vorhergehenden Ausführungsformen, wobei das Halbzeug in Schritt c) durch Zufuhr mindestens einer zweiten Energiemenge von dem formbaren Zustand (II) in den formstabilen Zustand (III) überführt wird.

Ausführungsform 5: Verfahren nach einer der vorhergehenden Ausführungsformen, wobei das Halbzeug in Schritt d) durch Zufuhr mindestens einer dritten Energiemenge von dem formstabilen Zustand (III) in den biegesteifen Zustand (IV) überführt wird.

Ausführungsform 6: Verfahren nach einer der vorhergehenden Ausführungsformen, wobei die Energiemenge dem Halbzeug zugeführt wird durch eines oder mehreres von Konvektion; Strahlung; Induktion.

Ausführungsform 7: Verfahren nach einer der vorhergehenden Ausführungsformen, wobei das in Schritt a) bereitgestellte Halbzeug eine Ausgangsform aufweist ausgewählt aus der Gruppe bestehend aus: einem Strang, insbesondere einem Strangprofil; einem Stab; einem Rohr; einer Platte; einem Endlosprofil, einer Endlosplatte.

Ausführungsform 8: Verfahren nach einer der vorhergehenden Ausführungsformen, wobei das in Schritt a) bereitgestellte Halbzeug mittels Filamentwinding oder Pultrusion oder Pullwinding oder Prepreg-Verfahren hergestellt ist.

Ausführungsform 9: Verfahren nach einer der vorhergehenden Ausführungsformen, wobei die Formgebung des Halbzeugs in Schritt c) ein Umformen eines Profils des Halbzeugs umfasst.

Ausführungsform 10: Verfahren nach einer der vorhergehenden Ausführungsformen, wobei das Formen des Halbzeugs in Schritt c) ein Krümmen des Halbzeugs um mindestens eine Achse umfasst.

Ausführungsform 11: Verfahren nach einer der vorhergehenden Ausführungsformen, wobei das Halbzeug in Schritt c) in eine Helix- oder Spiralform geformt wird.

Ausführungsform 12: Verfahren nach einer der vorhergehenden Ausführungsformen, wobei das Halbzeug in Schritt c) kontinuierlich oder segmentweise geformt wird.

Ausführungsform 13: Verfahren nach einer der vorhergehenden Ausführungsformen, wobei das Verfahren weiterhin eine Änderung einer räumlichen Lage des Halbzeugs mittels mindestens einer Bewegungseinheit umfasst.

Ausführungsform 14: Verfahren nach der vorhergehenden Ausführungsform, wobei die Bewegungseinheit mindestens ein Element umfasst ausgewählt aus der Gruppe bestehend aus: einer Rolle, insbesondere einer Kombination von Rollen; einer Förderkette; einem Förderband; einem Klemmantrieb.

Ausführungsform 15: Verfahren nach einer der vorhergehenden Ausführungsformen, wobei das Halbzeug in Schritt c) mittels mindestens einer Formgebeeinheit geformt wird.

Ausführungsform 16: Verfahren nach den Ausführungsformen 13 und 15, wobei die Formgebeeinheit in die Bewegungseinheit integriert ist.

Ausführungsform 17: Verfahren nach einer der zwei vorhergehenden Ausführungsformen, wobei die Formgebeeinheit mindestens ein Element umfasst ausgewählt aus der Gruppe bestehend aus: einer Matrize; einer Außenform, insbesondere einer Außenform mit helikaler Nut, einer Außenform mit beweglicher Kontaktfläche oder mit unbeweglicher, glatter und gleitfähiger Kontaktfläche; einer Innenform, insbesondere einer Innenform mit helikaler Nut; einer Rolle; einer Öffnung.

Ausführungsform 18: Verfahren nach einer der drei vorhergehenden Ausführungsformen, wobei Schritt c) ein Relativbewegen des Halbzeugs und der Formgebeeinheit umfasst.

Ausführungsform 19: Verfahren nach einer der vorhergehenden Ausführungsformen, wobei das Verfahren weiterhin mindestens einen Steuerungsschritt e) aufweist, umfassend:

e1) Bestimmen des Umsatzgrads und/oder einer Umformbarkeit des Halbzeugs; und
e2) Regeln einer Geschwindigkeit des Halbzeugs und/oder einer Energiezufuhr.

Ausführungsform 20: Verfahren nach der vorhergehenden Ausführungsform, wobei der Steuerungsschritt e) vor dem Formen in Schritt c) durchgeführt wird.

Ausführungsform 21: Formelement hergestellt mittels einem Verfahren nach einer der vorhergehenden Ausführungsformen.

Ausführungsform 22: Computerprogramm umfassend computerausführbare Anweisungen zur Durchführung eines Steuerungsschritts wenn das Programm auf einem Computer oder Computernetzwerk ausgeführt wird, wobei der Steuerungsschritt ein Bestimmen eines Umsatzgrads und/oder einer Umformbarkeit eines Halbzeugs umfasst, wobei der Steuerungsschritt weiterhin ein Regeln des Prozesses durch Anpassen einer Geschwindigkeit des Halbzeugs und/oder einer Energiezufuhr zu dem Halbzeug umfasst.

Ausführungsform 23: Vorrichtung zum Herstellen von Formelementen, die Vorrichtung umfassend:

- mindestens eine Formgebeeinheit;
- mindestens eine Bewegungseinheit; und
- mindestens eine Energiezuführeinheit,

wobei die Vorrichtung eingerichtet ist, um ein Halbzeug von einem biegeschlaffen Zustand (I) in einen biegesteifen Zustand (IV) zu überführen, wobei das Halbzeug in dem biegeschlaffen Zustand (I) einen ersten Umsatzgrad aufweist, wobei das Halbzeug in einem formbaren Zustand (II) einen zweiten Umsatzgrad aufweist, wobei der erste Umsatzgrad geringer ist als der zweite Umsatzgrad, wobei das Halbzeug ein Reaktivkunststoff-Material und Verstärkungsfasern aufweist, wobei die Verstärkungsfasern zumindest teilweise in das Reaktivkunststoff-Material eingebettet sind.

Ausführungsform 24: Vorrichtung nach der vorhergehenden Ausführungsform, wobei die Vorrichtung weiterhin mindestens eine Steuereinheit aufweist, wobei die Steuereinheit eingerichtet ist, um einen Steuerungsschritt durchzuführen, wobei der Steuerungsschritt ein Bestimmeneines Umsatzgrads und/oder einer Umformbarkeit eines Halbzeugs umfasst, wobei der Steuerungsschritt weiterhin ein Regeln, insbesondere durch Anpassen, einer Geschwindigkeit des Halbzeugs und/oder einer Energiezufuhr zu dem Halbzeug umfasst.

Ausführungsform 25: Vorrichtung nach der vorhergehenden Ausführungsform, wobei die Steuereinheit weiterhin mindestens einen Speicher umfasst, wobei die Steuereinheit eingerichtet ist, um mindestens einen Steuerungsparameter in dem Speicher zu speichern. Ausführungsform 26: Vorrichtung nach einer der drei vorhergehenden Ausführungsformen, wobei die Vorrichtung eingerichtet ist, um zumindest Schritte b) bis d) eines Verfahrens zur Herstellung mindestens eines Formelements gemäß einer der vorhergehenden, sich auf ein Verfahren beziehenden Ausführungsformen auszuführen.

Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.
Im Einzelnen zeigen:

Figur 1 ein Ablaufdiagramm eines Ausführungsbeispiels eines Verfahrens zur Herstellung mindestens eines Formelements;

Figur 2 eine schematische Darstellung zweier Ausführungsbeispiele eines Verfahrens zur Herstellung mindestens eines Formelements;

Figur 3 ein Diagramm einer Biegesteifigkeit eines Halbzeugs in einem Ausführungsbeispiel eines Verfahrens zur Herstellung mindestens eines Formelements;

Figur 4 eine schematische Darstellung von Umsatzgraden, Biegesteifigkeiten und Oberflächenhärten eines Halbzeugs in einem Ausführungsbeispiel eines Verfahrens zur Herstellung mindestens eines Formelements;

Figur 5 eine schematische Darstellung einer kontinuierlichen Formgebung;

Figur 6 eine schematische Darstellung einer segmentweisen Formgebung;

Figuren 7A bis 9C schematische Darstellungen von Ausführungsbeispielen von Formgebeeinheiten;

Figuren 10A bis 10D schematische Darstellungen von Ausführungsbeispielen von Bewegungseinheiten;

Figur 11 eine schematische Darstellung eines Ausführungsbeispiels einer Vorrichtung zum Herstellen von Formelementen;

Figuren 12A bis 12C Ausführungsbeispiele eines Formelements in einer schematischen Darstellung (Figur 12A, in einer Detailansicht (Figur 12B) und in einer Schnittansicht (Figur 12 C);

Figur 13 ein Diagramm von experimentellen Ergebnissen zur Viskosität eines Reaktivkunststoff-Materials eines Halbzeugs in einem Ausführungsbeispiel eines Verfahrens zur Herstellung mindestens eines Formelements;

Figur 14 ein Versuchsaufbau eines Dreipunktbiegeversuchs in einer schematischen Darstellung;

Figur 15 ein Diagramm von experimentellen Ergebnissen zur Widerstandskraft eines Halbzeugs in einem Ausführungsbeispiel eines Verfahrens zur Herstellung mindestens eines Formelements; und

Figur 16 ein Versuchsaufbau zum Formen eines Halbzeugs in Schritt c) eines Ausführungsbeispiels eines Verfahrens zur Herstellung mindestens eines Formelements.

Beschreibung der Ausführungsbeispiele

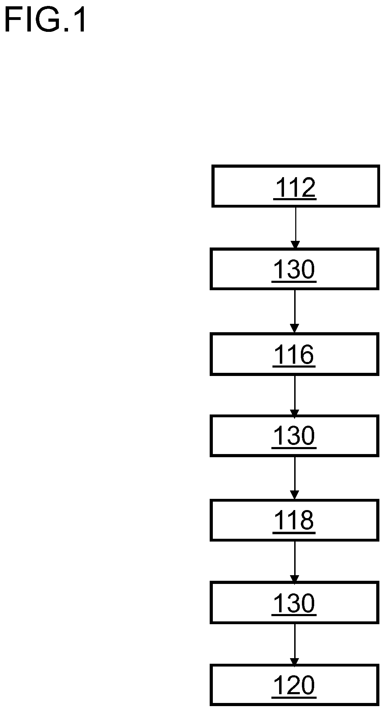

Figur 1 zeigt ein Ablaufdiagramm eines Ausführungsbeispiels eines Verfahrens zur Herstellung mindestens eines Formelements 110. Das Verfahren umfasst die folgenden Schritte:

a) (gekennzeichnet durch Bezugsziffer 112) Bereitstellen eines Halbzeugs 114 in einem biegeschlaffen Zustand (I), wobei das Halbzeug 114 ein Reaktivkunststoff-Material, beispielsweise ein reaktives Kunststoff-Material, und Verstärkungsfasern aufweist, wobei die Verstärkungsfasern zumindest teilweise in das Reaktivkunststoff-Material eingebettet sind;
b) (gekennzeichnet durch Bezugsziffer 116) Überführen des Halbzeugs 114 von dem biegeschlaffen Zustand (I) in einen formbaren Zustand (II) durch Zufuhr einer ersten Energiemenge, wobei das Halbzeug 114 in dem biegeschlaffen Zustand (I) einen ersten Umsatzgrad aufweist, wobei das Halbzeug 114 in einem formbaren Zustand (II) einen zweiten Umsatzgrad aufweist, wobei der erste Umsatzgrad geringer ist als der zweite Umsatzgrad;
c) (gekennzeichnet durch Bezugsziffer 118) Formen des Halbzeugs 114, wobei dem Halbzeug 114 die Geometrie des Formelements 110 aufgeprägt wird, wobei das Halbzeug 114 während der Formgebung von dem formbaren Zustand (II) in einen formstabilen Zustand (III) überführt wird; und
d) (gekennzeichnet durch Bezugsziffer 120) Überführen des Halbzeugs 114 von dem formstabilen Zustand (III) in einen biegesteifen Zustand (IV).

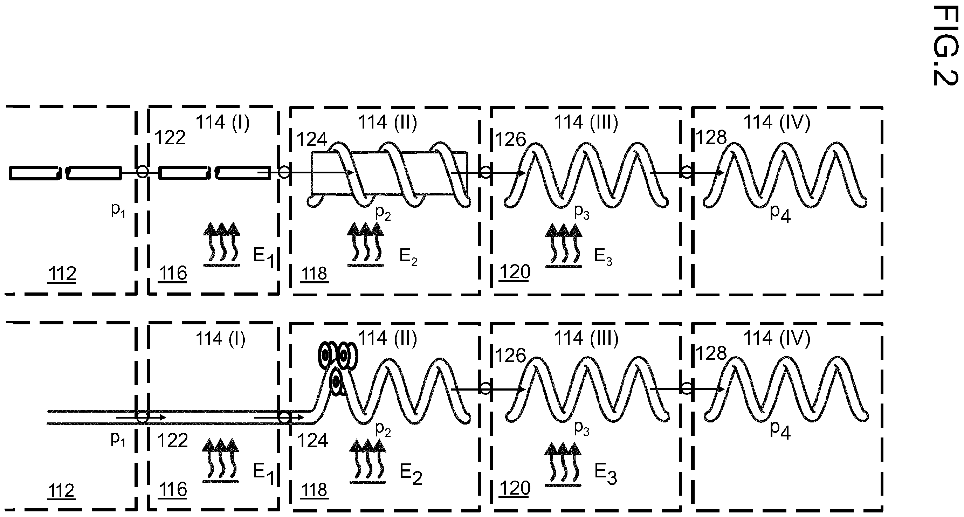

Beispielsweise kann das Formelement 110 ein Formteil sein. So kann das Formelement 110 ausgewählt sein aus der Gruppe bestehend aus einer Schraubenfeder, einer Drehstabfeder, einem Rohr, einem Stabilisator, einem Lenkgestänge, einem Handlauf, einem Geländer, einer Blattfeder, einer Mäanderfeder und einer C-Feder. Das Halbzeug 114 kann ein vorgefertigtes Stoffgemisch sein, welches aus einem Kunststoff-Material, beispielsweise aus einem aushärtbaren Reaktivkunststoff, und darin eingebetteten Verstärkungsfasern bestehen kann. Das Halbzeug 114 kann beispielsweise als Strangprofil bereitgestellt werden. Insbesondere kann das Halbzeug beispielsweise ein Hohl- oder Vollprofil sein und in einem Filamentwinding-, einem Pultrusions-, einem Prepreg- oder einem Pullwinding-Verfahren, beispielsweise in sogenannten Prepreg-Maschinen, hergestellt sein. Figuren 2 und Figuren 4 bis 12C und 16 zeigen Ausführungsformen, in welchen das Halbzeug 114 als ein Rohr oder Stab bereitgestellt wird.

Figur 2 zeigt eine schematische Darstellung eines Ausführungsbeispiels eines Verfahrens zur Herstellung eines Formelements 110. Beispielsweise können die Verfahrensschritte in räumlich getrennten Bereichen durchgeführt werden, welche in Figur 2 durch die gestrichelten Kästen illustriert sind. Die obere Reihe von Figur 2 zeigt eine Ausführungsform des Verfahrens in einem diskontinuierlichen Prozess und die untere Reihe von Figur 2 zeigt eine Ausführungsform des Verfahrens in einem kontinuierlichen Prozess. In Schritt a) 112 wird ein Halbzeug 114 in einem biegeschlaffen Zustand (I) bereitgestellt, wobei das Halbzeug 114 in dem biegeschlaffen Zustand (I) einen ersten Umsatzgrad $p_1$ aufweist.

Das Überführen des Halbzeugs 114 von dem biegeschlaffen Zustand (I) in einen formbaren Zustand (II) in Schritt b) 116 erfolgt durch Zufuhr einer ersten Energiemenge $E_1$. So kann beispielsweise die Zufuhr der ersten Energiemenge $E_1$ die Aushärtungsreaktion, beispielsweise die Polymerisation, des reaktiven Kunststoff-Materials des Halbzeugs 114 auslösen oder vorantreiben. Auf diese Weise kann das Halbzeug 114 von dem biegeschlaffen Zustand (I) in den formbaren Zustand (II) überführt werden. Insbesondere kann die erste Energiemenge $E_1$ dem Halbzeug 114 beispielsweise in Form von Wärme zugeführt werden. Beispielsweise kann das Halbzeug 114 in biegeschlaffem Zustand (I) durch die erste Energiemenge $E_1$ erhitzt werden. Das Halbzeug 114 in dem formbaren Zustand (II) weist einen zweiten Umsatzgrad $p_2$ auf, wobei $p_2 > p_1$.

In Schritt c) 118 wird dem Halbzeug 114, insbesondere dem Halbzeug 114 in formbarem Zustand (II), die Geometrie des Formelements 110 aufgeprägt. Während dieser Formgebung wird das Halbzeug 114 beispielsweise von dem formbaren Zustand (II) in einen formstabilen Zustand (III) überführt. In dem formstabilen Zustand (III) kann das Halbzeug 114, insbesondere das Reaktivkunststoff-Material des Halbzeugs 114, beispielsweise einen dritten Umsatzgrad $p_3$ aufweisen, wobei $p_3 > p_2$. Beispielsweise kann ein Überführen des Halbzeugs 114 von dem formbaren Zustand (II) in den formstabilen Zustand (III) durch Zufuhr der zweiten Energiemenge $E_2$ geschehen, wobei $E_2 \neq E_1$ sein kann.

In Schritt d) 120 wird das Halbzeug 114 von dem formstabilen Zustand (III) in einen biegesteifen Zustand (IV) überführt. Insbesondere kann das Halbzeug 114 in dem biegesteifen Zustand (IV), insbesondere das Reaktivkunststoff-Material des Halbzeugs 114, einen vierten Umsatzgrad $p_4$ aufweisen, wobei $p_4 > p_3$. Beispielsweise kann ein Überführen des Halbzeugs 114 von dem formstabilen Zustand (III) in den biegesteifen Zustand (IV) durch Zufuhr der dritten Energiemenge $E_3$ geschehen, wobei $E_3 \neq E_2$ und/oder $E_3 \neq E_1$ sein kann.

Insbesondere kann das Halbzeug 114 ab einem durch einen ersten Kreis 122 markierten Zeitpunkt den biegeschlaffen Zustand (I) aufweisen, ab einem durch einen zweiter Kreis 124 markierten Zeitpunkt den formbaren Zustand (II) aufweisen, ab einem durch einen dritten Kreis 126 markierten Zeitpunkt den formstabilen Zustand (III) aufweisen und ab einem durch einen dritten Kreis 128 markierten Zeitpunkt den biegesteifen Zustand (IV) aufweisen.

Das Verfahren zur Herstellung mindestens eines Formelements 110 kann weiterhin mindestens einen Steuerungsschritt e) (gekennzeichnet durch Bezugsziffer 130) aufweisen. Der Steuerungsschritt e) 130 kann beispielsweise die folgenden hier nicht dargestellten Teilschritte umfassen:

e1) Bestimmen des Umsatzgrads und/oder einer Umformbarkeit des Halbzeugs 114; und
e2) Regeln einer Geschwindigkeit, beispielsweise einer Prozessgeschwindigkeit oder Durchlaufgeschwindigkeit oder Verweilzeit, des Halbzeugs 114 und/oder einer Energiezufuhr.

Der Steuerungsschritt e) 130 kann, wie in Figur 1 gezeigt, beispielsweise zwischen Schritt a) 112 und Schritt b) 116 des Verfahrens durchgeführt werden. Alternativ oder zusätzlich kann der Steuerungsschritt e) 130 zwischen Schritt b) 116 und Schritt c) 118 durchgeführt werden. Alternativ oder zusätzlich kann der Steuerungsschritt e) 130 zwischen Schritt c) 118 und Schritt d) 120 durchgeführt werden. Auch eine hier nicht illustrierte zeitgleiche Durchführung von Steuerungsschritt e) 130 mit einem oder mehrerer der Schritte a), b), c) und d) des Verfahrens zur Herstellung mindestens eines Formelements 110, ist möglich.

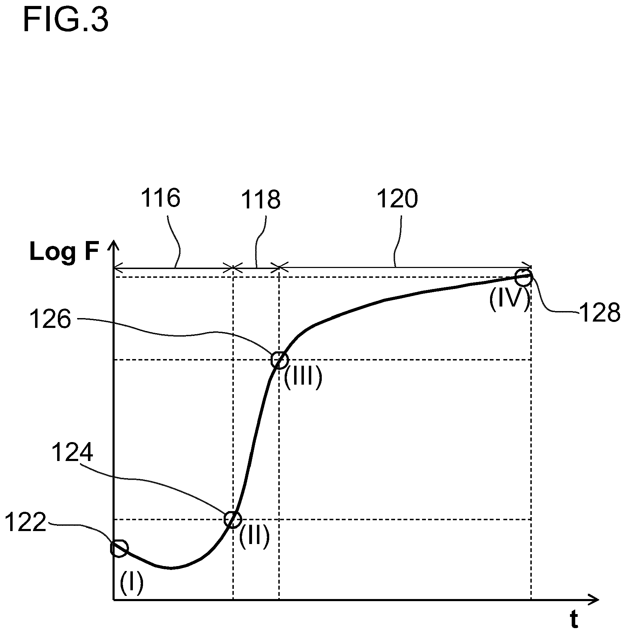

Figur 3 zeigt schematisch ein Diagramm einer Biegekraft F zum Umformen eines Halbzeugs 114 in einem Ausführungsbeispiel eines Verfahrens zur Herstellung mindestens eines Formelements 110. Die logarithmisch auf der vertikalen Achse aufgetragene Biegekraft F zum Umformen des Halbzeugs 114 variiert mit den unterschiedlichen Zuständen (I) bis (IV) des Halbzeugs 114 über den Verlauf der Schritte b), c) und d) des Verfahrens. Die horizontale Achse zeigt einen linearen Zeitverlauf t. Insbesondere kann in dem in Figur 3 illustrierten Diagramm beispielsweise eine Aushärtereaktion, beispielsweise die Polymerisationsreaktion, des Halbzeugs 114 zeigen, wobei eine Gesamtdauer der Aushärtereaktion, insbesondere eine Gesamtdauer von beispielsweise mehreren Minuten, in drei Phasen der Entwicklung der Biegekraft, beispielsweise durch die Schritte b) 116, c) 118 und d) 120 gekennzeichnet, unterteilt werden.

Beispielsweise kann das Überführen des Halbzeugs 114 von dem biegeschlaffen Zustand (I) in den formbaren Zustand (II) durch Zufuhr der ersten Energiemenge E1 des Schritts b) umfassen, dass verschiedene Elemente des Reaktivkunststoff-Materials aufgeheizt werden, wobei manche der Elemente beispielsweise schmelzen können, zum Beispiel von festen Kristallen in flüssige Reaktanden, beispielsweise Reagenzien. So kann die Biegekraft zum Umformen und/oder eine Viskosität des Halbzeugs 114, beispielsweise des Halbzeugs 114 als Gesamtsystem, sich durch Zufuhr der ersten Energiemenge E1 anfangs zunächst sogar verringern kann weil eine physikalische Absenkung der Viskosität mit steigender Temperatur eventuell schneller erfolgt als eine Erhöhung der Viskosität durch Polymerisation. Beispielsweise kann das Halbzeug 114 vor Erreichen des formbaren Zustands (II) einen chemischen Umschlagpunkt, beispielsweise ein Polymerisationslevel, erreichen ab dem ausschließlich ein Verfestigen und somit ein Anstieg der Biegekraft zum Umformen des Halbzeugs 114 erfolgen kann.

Beispielsweise kann das Überführen des Halbzeugs 114 von dem formbaren Zustand (II) in den formstabilen Zustand (III) des Schritts c) umfassen, dass das Halbzeug 114 durch den ansteigenden Umsatzgrad, beispielsweise von dem zweiten Umsatzgrad $p_2$ zum dritten Umsatzgrad $p_3$, insbesondere durch das ansteigende Polymerisationslevel, fester wird und somit die notwendige Biegekraft zum Umformen des Halbzeugs 114 steigt. Insbesondere kann die Biegekraft zum Umformen des Halbzeugs 114 in Schritt c) 118 bis zu einem Punkt steigen ab dem ein Formen nicht mehr möglich ist, ohne dabei das Halbzeug 114 zu beschädigen, beispielsweise mit sehr hohem Kraftaufwand, d.h. bis zum Erreichen des formstabilen Zustands (III) des Halbzeugs 114.

Die Aushärtungsreaktion kann beispielsweise eine exotherme Reaktion sein, so dass die Polymerisation des Halbzeugs 114 beispielsweise eine Temperatur des Halbzeugs 114 erhöhen kann. So kann sich die Aushärtungsreaktion des Halbzeugs 114 beispielsweise selbst verstärken, so dass, beispielsweise in Schritt c) 118, ein exponentieller Anstieg der Biegekraft zum Umformen des Halbzeugs erfolgen kann.

Nach Durchführung des Schritts c) 118 kann das Halbzeug 114 z.B. eine hohe Biegekraft zum Umformen des Halbzeugs aufweisen, seine maximalen Eigenschaften, wie z.B. mechanische Festigkeit, insbesondere Biegesteifigkeit und Glasübergangstemperatur, beispielsweise jedoch noch nicht erreicht haben. Beispielsweise kann die Durchführung des Schritts c) eine kritische Phase des Herstellungsverfahrens sein, beispielsweise da das Halbzeug 114 in dieser Phase geformt wird, wobei diese Phase beispielsweise weniger als 30s, insbesondere ein Fünftel, beispielsweise ein Zehntel der Gesamtdauer der Aushärtungsreaktion, andauern kann.

In Schritt d) 120 erfolgt das Überführen des Halbzeugs 114 von dem formstabilen Zustand (III) in den biegesteifen Zustand (IV), d. h. das Halbzeug 114 kann beispielsweise nach Abschluss dieser Phase seine maximalen oder finalen Eigenschaften erreichen.

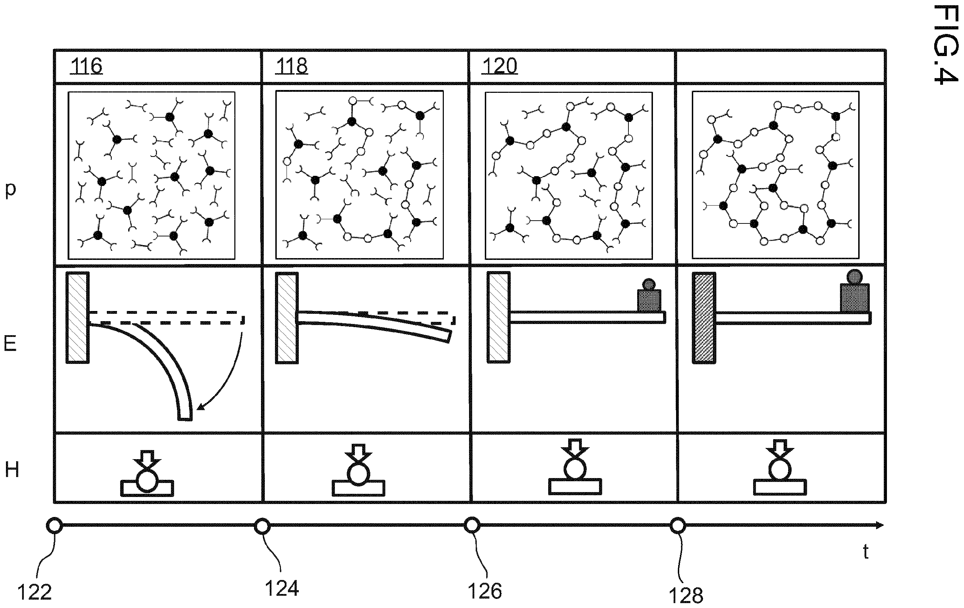

Figur 4 zeigt eine schematische Darstellung von Umsatzgraden p, Biegesteifigkeiten E und Oberflächenhärten H eines Halbzeugs 114 in einem Ausführungsbeispiel eines Verfahrens zur Herstellung mindestens eines Formelements 110. Die Verfahrensschritte b) bis d) laufen in dem in Figur 4 dargestellten Schema, entsprechend der horizontalen Zeitachse t, von links nach rechts ab. In der mit P gekennzeichneten Bildreihe ist ein von links nach rechts ansteigender Umsatzgrad p dargestellt. In der mit E gekennzeichneten Bildreihe ist ein Ansteigen der Biegesteifigkeit oder Formstabilität von links nach rechts illustriert und die mit H gekennzeichnete Bildreihe zeigt von links nach rechts eine steigende Oberflächenhärte H.

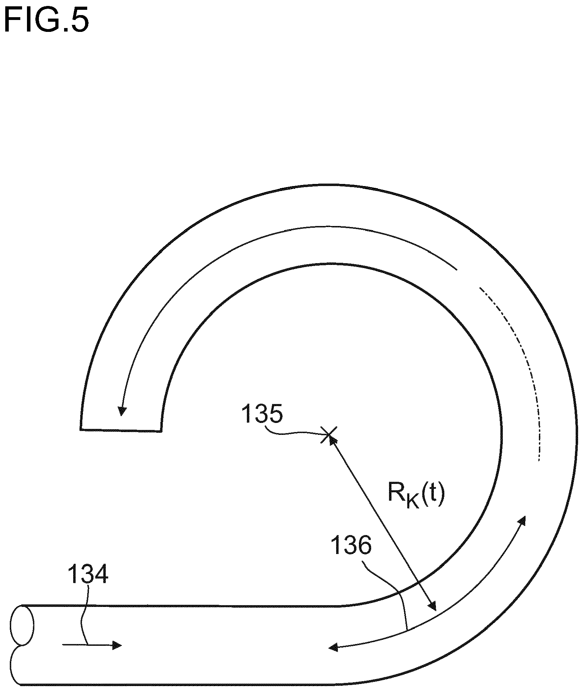

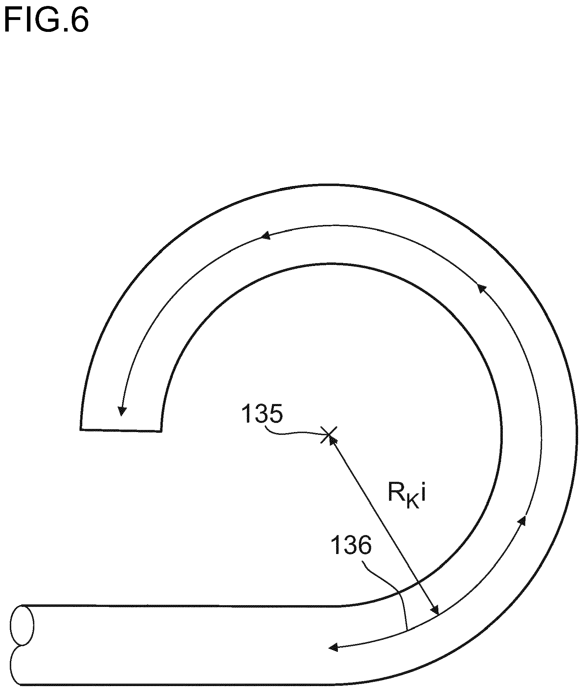

Das Formen des Halbzeugs 114 in Schritt c), insbesondere sowohl eine in Figur 5 gezeigte kontinuierliche Formgebung als auch eine in Figur 6 illustrierte segmentweise Formgebung, kann ein Krümmen des Halbzeugs 114 um mindestens eine Achse 132 umfassen. Insbesondere kann das Halbzeug 114 in Schritt c) um die mindestens eine Achse 132 gekrümmt werden. So kann das Halbzeug 132 nach der Formgebung in Schritt c) 118 beispielsweise mindestens eine Krümmung aufweisen. Insbesondere kann das gekrümmte Halbzeug 114 beispielsweis mindestens einen Krümmungsradius $R_k$ aufweisen.

Insbesondere kann die in Figur 5 gezeigte kontinuierlichen Formgebung, wie sie beispielsweise in Schritt c) 118 des Verfahrens zur Herstellung mindestens eines Formelements 110 durchgeführt werden kann, einen zeitabhängigen Krümmungsradius $R_k(t)$ aufweisen. Insbesondere kann der Krümmungsradius $R_k(t)$ beispielsweise eine sich zeitlich verändernde stetige Funktion aufweisen. Die kontinuierliche Formgebung kann insbesondere ein durchgängiges oder stetiges Formen umfassen. So kann das Halbzeug 114 beispielsweise kontinuierlich mit einer Geschwindigkeit V 134 bewegt werden. Für die Geschwindigkeit 134 kann beispielsweise folgende Formel gelten: V = dL/dt, wobei L einer zeitabhängigen Länge L(t) 136 des mit der Geschwindigkeit V 134 bewegten Halbzeugs 114 entspricht. Das Formen, insbesondere die kontinuierliche Formgebung, des Halbzeugs 114 kann beispielsweise ein ununterbrochenes Formen des Halbzeugs 114 umfassen. Zum Beispiel kann Schritt c) eine ununterbrochene Fortdauer des Formens des Halbzeugs 114 umfassen.

Figur 6 zeigt eine schematische Darstellung einer segmentweisen Formgebung, wie sie beispielsweise in Schritt c) 118 des Verfahrens zur Herstellung mindesten eines Formelements 110 durchgeführt werden kann. Dabei kann dem Halbzeug 114 ein segmentweise variierender Krümmungsradius $R_k^i$ auf eine Länge 138 $\Delta L^i$ des Halbzeugs 114, insbesondere auf eine Profillänge, über eine Zeit $\Delta t^i$ aufgeprägt werden. Das Formen, insbesondere die segmentweise Formgebung, des Halbzeugs 114 kann beispielsweise ein Aufprägen einer Form, beispielsweise ein Krümmen, eines Abschnitts oder Segments des Halbzeugs 114 umfassen, in einem Wechsel mit einer Weiterbewegung des Halbzeugs 114.

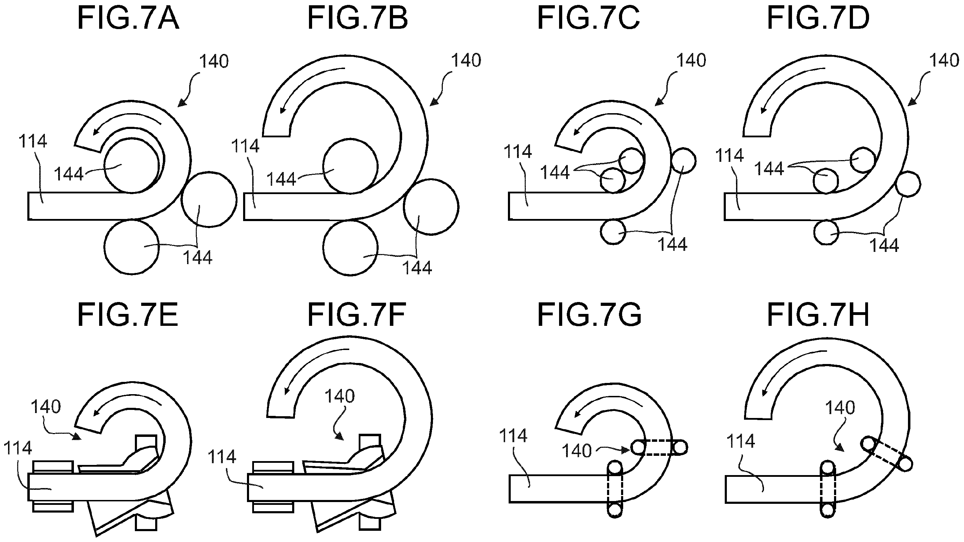

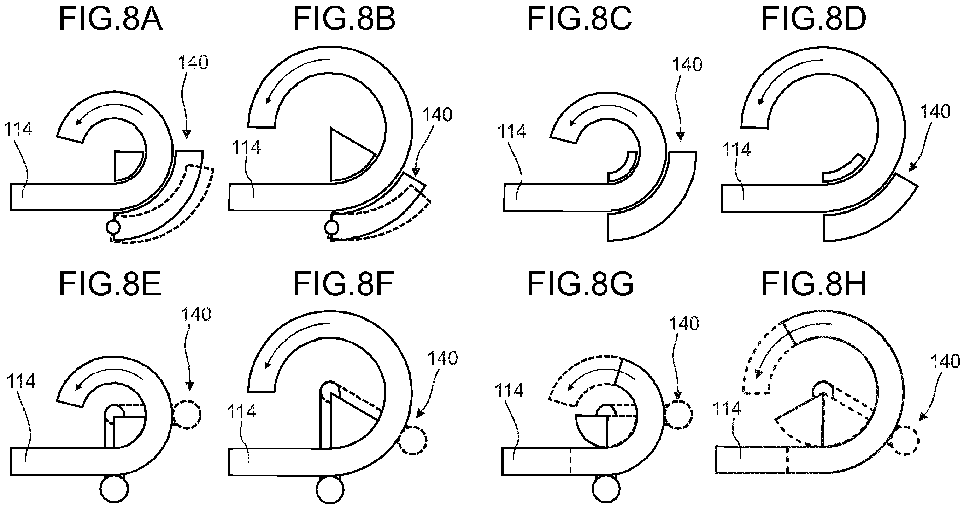

In den Figuren 7A bis 9C sind beispielsweise schematische Darstellungen von Ausführungsbeispielen von Formgebeeinheiten 140 dargestellt. Wie in den Figuren erkennbar, kann die Formgebeeinheit 140 unterschiedlich ausgestaltet sein. So kann die Formgebeeinheit 140 beispielsweise eine Außenform, insbesondere eine Außenform mit beweglicher Kontaktfläche oder mit unbeweglicher und gleitfähiger Kontaktfläche, aufweisen. Beispielsweise zeigen die Figuren 7A bis 7J Ausführungsbeispiele von Formgebeeinheiten 140 für eine kontinuierliche Formgebung, wobei die Formgebeeinheit 140 beispielsweise stationäre Elemente oder rotierende Elemente, beispielsweise Rollen 144, aufweisen kann. Die Figurenpaare 7A und 7B, 7C und 7D, 7E und 7F, 7G und 7H, 7I und 7J zeigen wie durch Änderung der Geometrie ein und derselben Formgebeeinheit 140 der Krümmungsradius kontinuierlich über die Zeit und Länge des Halbzeugs verändert werden kann. Die Figuren 8A bis 8H zeigen beispielsweise Ausführungsbeispiele von Formgebeeinheiten 140 für eine segmentweise Formgebung, wobei die Formgebeeinheit 140 beispielsweise bewegliche Elemente aufweisen kann. Insbesondere können weitere Positionen der beweglichen Elemente der Formgebeeinheit 140 in den Figuren durch eine gestrichelte Darstellung illustriert sein. Eine Bewegung der beweglichen Elemente der Formgebeeinheit 140 kann in den Figuren auch mittels Pfeilen angezeigt sein.

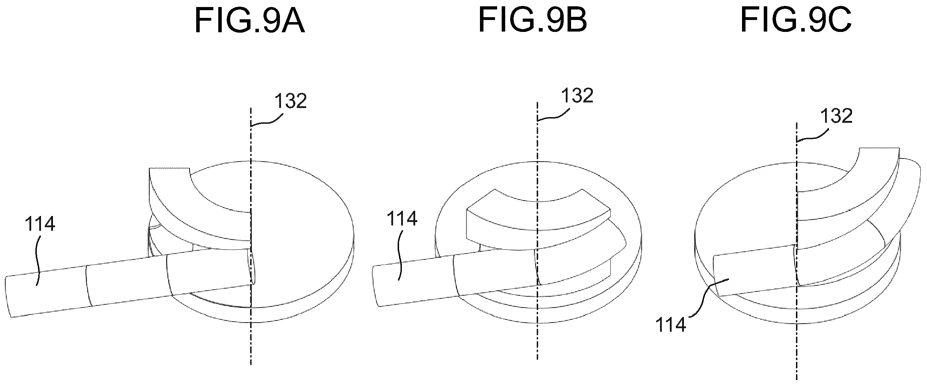

In den Figuren 9A bis C ist eine dreidimensionale Darstellung eines Ausführungsbeispiels einer Formgebeeinheit 140 dargestellt, ähnlich zur zweidimensional gezeigten Formgebeeinheit 140 in den Figuren 8G und 8H. Insbesondere kann die Formgebeeinheit 140 eine Innenform, beispielsweise eine Innenform mit helikaler Nut, aufweisen. Insbesondere kann eine derartig geformte Formgebeeinheit 140 beispielsweise für ein Formen des Halbzeugs 114 in eine Helix- oder Spiralform verwendet werden. Beispielsweise kann die Formgebeeinheit 140 auch eine Bewegung, beispielsweise eine kombinierte Bewegung aus Rotation und Translation, ausführen, um das Halbzeug 114 in die Helix- oder Spiralform zu formen. So kann die Formgebeeinheit 140, wie in den Figuren gezeigt, eine Rotation um die Achse 132 ausführen und gleichzeitig entlang der Achse 132 translatorisch bewegt werden, um das Halbzeug 114 in die Helix- oder Spiralform zu formen.

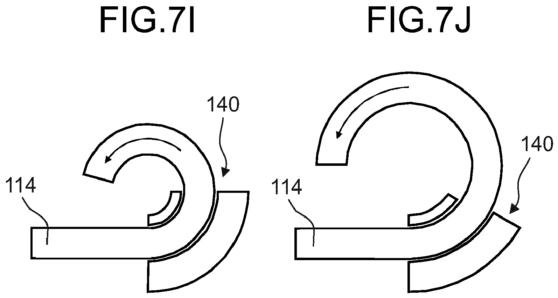

Figur 9 ist dreidimensional dargestellt, um beispielhaft zu verdeutlichen, dass generell mit den in den zweidimensional dargestellten Figuren 7 und 8 gezeigten Formgebeeinheiten 140 auch dreidimensionale gekrümmte helixförmige Formen herstellbar sein können.

Beispielsweise kann die Formgebeeinheit 140 eingerichtet sein, um ein inkrementelles kontinuierliches oder quasikontinuierliches Biegen und Prägen des Halbzeugs 114 apparativ umzusetzen. So kann beispielsweise eine kontinuierlich durchlaufene in ihrer Konstellation veränderliche Kombination mehrerer Rollen 144 zum Biegen unter Längszug oder Längsdruck dem Halbzeug 114 die gewünschte Geometrie des Formelements 110 aufprägen. Alternativ oder zusätzlich kann beispielsweise eine kontinuierlich durchlaufene in ihrer Konstellation veränderliche Kombination mehrerer Querschnittsöffnungen, beispielsweise ähnlich oder analog zu einem Nissin-Prozess, wie beispielsweise in Figuren 7E und 7F gezeigt sein kann, dem Halbzeug 114 die gewünschte Geometrie des Formelements 110 aufprägen. Alternativ oder zusätzlich kann dem Halbzeug 114 beispielsweise die gewünschte Geometrie des Formelements 110 aufgeprägt werden indem das Halbzeug 114 eine Außenform mit unbeweglicher, glatter und gleitfähiger Kontaktfläche durchläuft. Alternativ oder zusätzlich kann dem Halbzeug 114 beispielsweise die gewünschte Geometrie des Formelements 110 auch aufgeprägt werden indem das Halbzeug 114 eine Außenform mit beweglicher Kontaktfläche, beispielsweise realisiert z.B. über Rollen 144, Förderketten oder Bänder auf Führungsschienen oder Klemmantriebe, durchläuft. Auch eine quasikontinuierlich schrittweise durchlaufene Form mit pro Sequenzfolge veränderlicher Geometrie und mit sequentiellem Einführen, Halten und Ausführen, ist möglich. So kann die Formgebeeinheit 140 beispielsweise eine Form aufweisen, welche beispielsweise während einer Sequenzfolge von Einführen, Halten und Ausführen entweder unverändert in ihrer Geometrie ist oder beim Einführen geweitet, beim Halten formend eng und beim Ausführen geweitet ist.

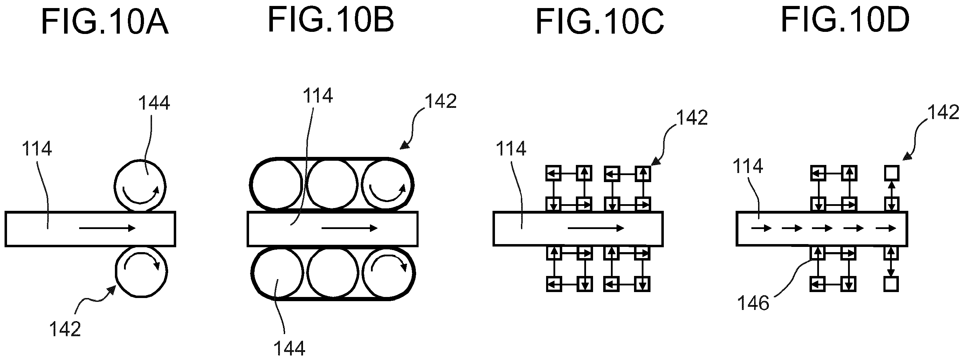

Figuren 10A bis 10D zeigen schematische Darstellungen von Ausführungsbeispielen von Bewegungseinheiten 142. Die Bewegungseinheit 142 kann insbesondere eingerichtet sein, um das Halbzeug 114 räumlich zu bewegen, beispielsweise durch Zug und/oder Druck. So kann die Bewegungseinheit 142 beispielsweise Rollen 144, insbesondere Abzugsrollen, und/oder Förderelemente 146, beispielsweise einer Förderkette oder Förderband, insbesondere in einem Raupenabzug, und oder einen Klemmantrieb aufweisen, wobei in den Figuren jeweils nur beispielhaft eine der Rollen 144 oder der Förderelemente 146 gekennzeichnet ist. Das Halbzeug 114 in biegeschlaffem Zustand (I) oder in formbarem Zustand (II) kann beispielsweise mittels der Bewegungseinheit 142 gezogen werden. Insbesondere kann das Halbzeug 114 in formstabilem Zustand (III) oder in biegesteifem Zustand (IV) mittels der Bewegungseinheit 142 gezogen oder geschoben werden.

Insbesondere können die Formgebeeinheit 140 und die Bewegungseinheit 142 auch integral ausgestaltet sein. So können die in den Figuren 7A bis 7D dargestellten Ausführungsbeispiele der Formgebeeinheit 140 beispielsweise Rollen 144 aufweisen, welche sowohl zur Formgebung als auch zur Bewegung des Halbzeugs 114 geeignet sind.

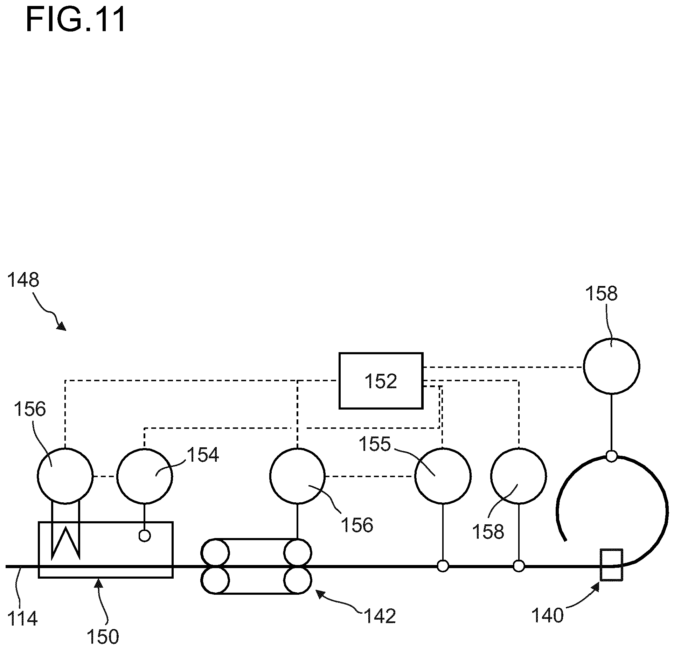

Sowohl die Formgebeeinheit 140 als auch die Bewegungseinheit 142 sind Teil einer erfindungsgemäßen Vorrichtung 148 zum Herstellen von Formelementen 110, wie sie beispielsweise schematisch in Figur 11 dargestellt ist. Die Vorrichtung 148 umfasst weiterhin mindestens eine Energiezuführeinheit 150 und ist eingerichtet, um ein Halbzeug 114 von einem biegeschlaffen Zustand (I) in einen biegesteifen Zustand (IV) zu überführen, wobei das Halbzeug 118 in dem biegeschlaffen Zustand (I) einen ersten Umsatzgrad $p_1$ aufweist, wobei das Halbzeug in einem formbaren Zustand (II) einen zweiten Umsatzgrad $p_2$ aufweist, wobei $p_1 < p_2$. Das Halbzeug 114 ist ein Reaktivkunststoff-Material und weist Verstärkungsfasern aufweist, wobei die Verstärkungsfasern zumindest teilweise in das Reaktivkunststoff-Material eingebettet sind.

Insbesondere kann das Halbzeug 114 entlang einer geraden Strecke und/oder einer Krümmungen aufweisenden Strecke bewegt werden und dabei beispielsweise durch die Energiezuführungseinheit 150 erhitzt werden. Beispielsweise kann die Energiezuführeinheit 150 ein Heizbad, insbesondere ein Ölbad, oder einen Heizofen aufweisen, welches das Halbzeug 114, wie in Figur 11 illustriert, beispielsweise durchläuft.

Die Vorrichtung 148 zum Herstellen von Formelementen 110 kann weiterhin mindestens eine Steuereinheit 152 aufweisen. Die Steuereinheit 152 kann insbesondere eingerichtet sein, um einen Steuerungsschritt durchzuführen, beispielsweise den Steuerungsschritt e) 130 des Verfahrens zur Herstellung eines Formelements 110, wie z.B. in Figur 1 gezeigt. Insbesondere kann die Steuereinheit 152 zum Bestimmen des Umsatzgrads und/oder der Umformbarkeit des Halbzeugs 114 mindestens einen Temperatursensor 154 zur Bestimmung einer Temperatur und/oder einen Geschwindigkeitssensor 155 zu Bestimmung einer Geschwindigkeit V des Halbzeugs 114 aufweisen. Weiterhin kann die Steuereinheit 152 zum Anpassen der Geschwindigkeit des Halbzeugs 114 und/oder der Energiezufuhr zu dem Halbzeug 114 mindestens einen Antrieb 156 zum Antreiben der Bewegungseinheit 142 und/oder zum Antrieb der Energiezuführeinheit 150 umfassen. Alternativ oder zusätzlich kann die Steuereinheit 152 zum Bestimmen des Umsatzgrads und/oder der Umformbarkeit des Halbzeugs 114 mindestens einen Qualitätssensor 158 zur Messung der Viskositäts oder Temperatur oder notwendigen Biegekraft zum Bestimmen des Umsatzgrades oder der Umformbarkeit des Halbzeugs 114 aufweisen. Beispielweise kann die Steuereinheit 152, wie in Figur 11 gezeigt, auch zwei Qualitätssensoren 158 aufweisen.

Beispielsweise kann das Halbzeug 114 der Vorrichtung 148 in dem biegeschlaffen Zustand (I) zugeführt werden. Dabei kann das Halbzeug 114 beispielsweise mittels mindestens einer Folie, insbesondere durch Folieren, umschossen sein und auf diese Weise gegen ein Auslaufen des Reaktivkunststoff-Materials geschützt sein.

Das Halbzeug 114 kann insbesondere durch die Energiezuführeinheit beispielsweise in einem kontinuierlichen oder quasi-kontinuierlichen Prozess vor der Formgebung, insbesondere vor einer Verformung durch die Formgebeeinheit 140, durch Energiezufuhr, insbesondere durch mindestens eine Zufuhr der ersten Energiemenge $E_1$, zur Reaktion gebracht werden. Beispielsweise kann das Halbzeug 114 dadurch den formbaren Zustand (II) erreichen und z.B. bei fortschreitender Aushärtungsreaktion von flüssig zu fest ohne weitere Energiezufuhr in der Formgebeeinheit 140, insbesondere in einem schmalen oder engen Zeitfenster, umgeformt werden, beispielsweise während das Halbzeug 114 von dem formbaren Zustand (II) in den formstabilen Zustand (III) überführt wird. So kann das Halbzeug 114 beispielsweise während des Formens seine endgültige Krümmung erhalten, wobei diese dem Halbzeug 114 so lange aufgeprägt werden kann bis es den formstabilen Zustand (III) erreicht hat. Beispielsweise kann das Formen des Halbzeugs 114 über eine Zeit und/oder eine Länge des geformten Halbzeugs 114 angepasst werden. So können dem Halbzeug 114 beispielsweise unterschiedliche Krümmungsradien und/oder Teilungen aufgeprägt werden.

Die Bewegungseinheit 142, beispielsweise eine Zugvorrichtung, kann sich alternativ oder zusätzlich zu dem in Figur 11 dargestellten Ausführungsbeispiel auch am Ende der Vorrichtung 148, beispielsweise nach der Formgebeeinheit 140 befinden. So kann die erfindungsgemäße Vorrichtung 148 beispielsweise in einem konstanten Zugbetrieb betrieben werden, beispielsweise ähnlich wie bei einer Freiformung von Stahldraht. Alternativ kann das Halbzeug 114 in der erfindungsgemäßen Vorrichtung 148 beispielsweise auch schrittweise gezogen werden, insbesondere mit einem geformten Werkzeug, beispielsweise ähnlich wie in einer radialen Pultrusion.

Die Vorrichtung 148 zum Herstellen von Formelementen110 kann beispielsweise eine in Figur 11 nicht dargestellte Schneidevorrichtung zum Abtrennen des Formelements 110 aufweisen.

Beispielsweise kann das durch die Formgebeeinheit 140 geformte Halbzeug 114, insbesondere zumindest ein bereits geformter Abschnitt des Halbzeugs 140, unter Beibehaltung seiner Form beispielsweise mittels der Bewegungseinheit 142 vorangeschoben werden. Insbesondere kann das Halbzeug 114 in dem formstabilen Zustand (III) geeignet sein einer Schwerkraft, insbesondere einer durch sein Eigengewicht verursachten Kraft, standzuhalten. Beispielsweise kann ein nach der Formgebeeinheit 140 angeordnetes Ölbad, beispielsweise eine Belastung des geformten Halbzeugs 114 durch seine eigene Schwerkraft direkt nach der Formgebung vermindern. Alternativ oder zusätzlich, kann das Halbzeug 140, beispielsweise direkt, im Anschluss an die Formgebung erwärmt werden, z.B. indem das Halbzeug 114 heißer Luft, heißer Flüssigkeit oder Wärmestrahlung ausgesetzt wird. Weiterhin kann das Halbzeug 114 nach der Formgebung auch eine vollständige Aushärtung, beispielsweise eine Nachhärtung, in einem Ofen oder Ölbad durchlaufen.

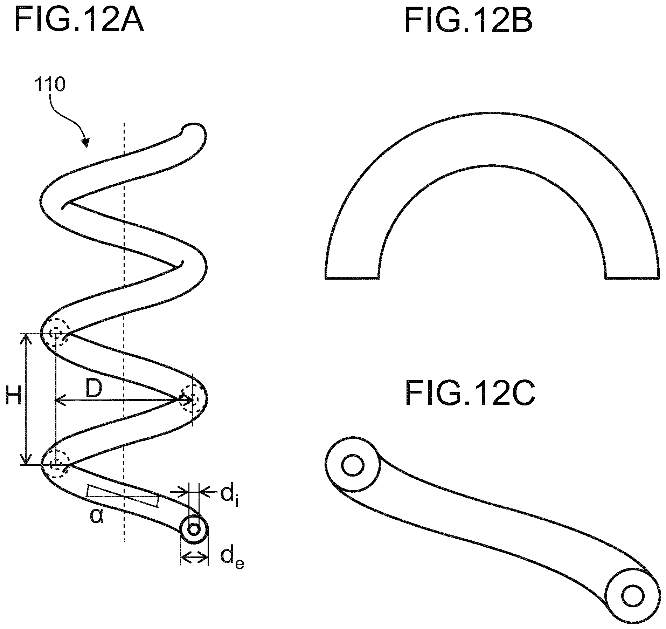

In Figur 12A ist ein Ausführungsbeispiel eines Formelements 110 gezeigt. Das Formelement 110 kann insbesondere eine Helix- oder Spiralform aufweisen, wobei eine Steigung H und ein Durchmesser D beispielsweise konstant sein können. Auch ein Steigungswinkel $\alpha$ kann beispielsweise konstant sein. In Figur 12B ist ein Ausschnitt des in Figur 12A illustrierten Formelements 110 in einer Ansicht von oben dargestellt. Figur 12C zeigt eine Schnittansicht des in Figur 12B illustrierten Ausschnitts des Formelements 110. Wie in den Figuren dargestellt, können das Halbzeug 114 sowie das Formelement 110 beispielsweise hohl ausgeführt sein. Insbesondere kann ein Außendurchmesser $d_e$ beispielsweise größer sein als ein Innendurchmesser $d_i$. Alternativ kann das Halbzeug 114 auch beispielsweise mit einem Inliner gefüllt sein, so kann beispielsweise der Innendurchmesser $d_i$ des Halbzeugs 114 durch einen Inliner ausgefüllt sein.

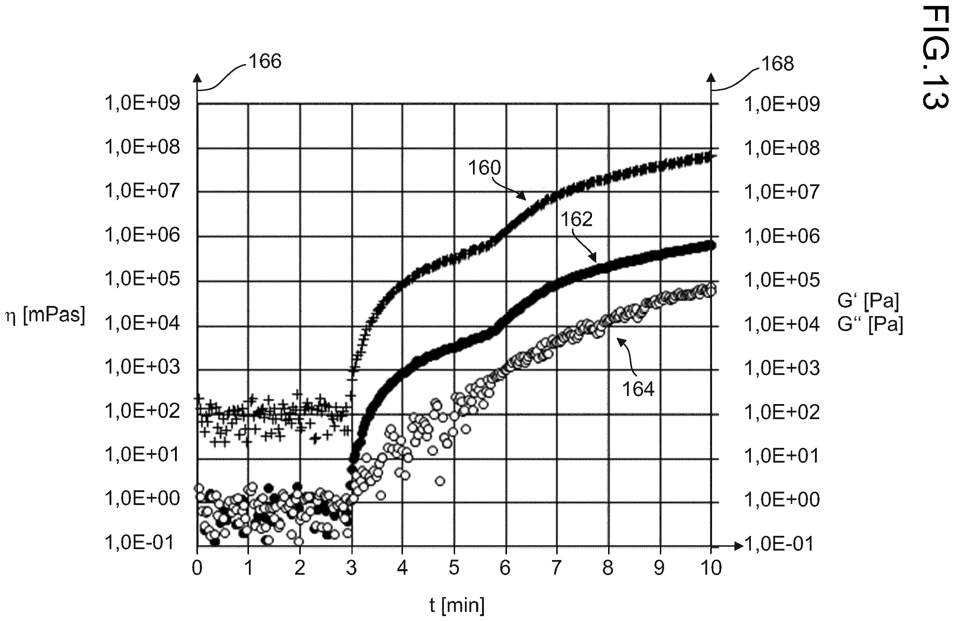

Figur 13 zeigt ein Diagramm von experimentellen Ergebnissen zur Viskosität eines Reaktivkunststoff-Materials eines Halbzeugs 114 in einem Ausführungsbeispiel eines Verfahrens 148 zur Herstellung mindestens eines Formelements 110. Das Diagramm zeigt den zeitlichen Verlauf der Viskosität $\eta$ 160, eines Speichermoduls G' 162 und eines Verlustmoduls G" 164 des Reaktivkunststoff-Materials. Die illustrierten Messwerte wurden beispielsweise für ein Reaktivkunststoff-Material zwischen oszillierenden Scheiben eines Rheometers bei einer Temperatur von 150°C bestimmt. Die Werte der Viskosität $\eta$ 160 ist linear auf der linksseitig angeordneten vertikalen Achse 166 in Millipascal Sekunden [mPa s] aufgetragen. Die Werte des Speichermoduls G' und des Verlustmoduls G" sind logarithmisch auf der rechtsseitig angeordneten vertikalen Achse 168 in Pa aufgetragen. Die horizontale Achse zeigt einen linearen Zeitverlauf t in Minuten.

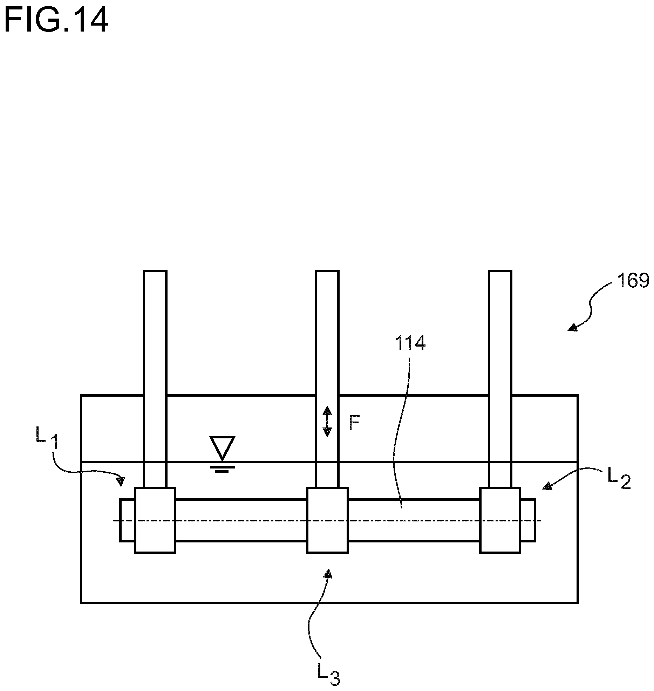

In Figur 14 ist ein Ausführungsbeispiel eines Versuchsaufbaus eines Dreipunkbiegeversuchs 169 in einer schematischen Darstellung gezeigt. Darin wird das Halbzeug 114 an zwei Lagerstellen $L_1$ und $L_2$, insbesondere an den beiden Enden des Halbzeugs 114, fixiert gehalten, während an einer dritten Stelle $L_3$, beispielsweise mittig zwischen den beiden Lagerstellen $L_1$ und $L_2$ angeordnet, eine Kraft F auf das Halbzeug 114 ausgeübt wird.

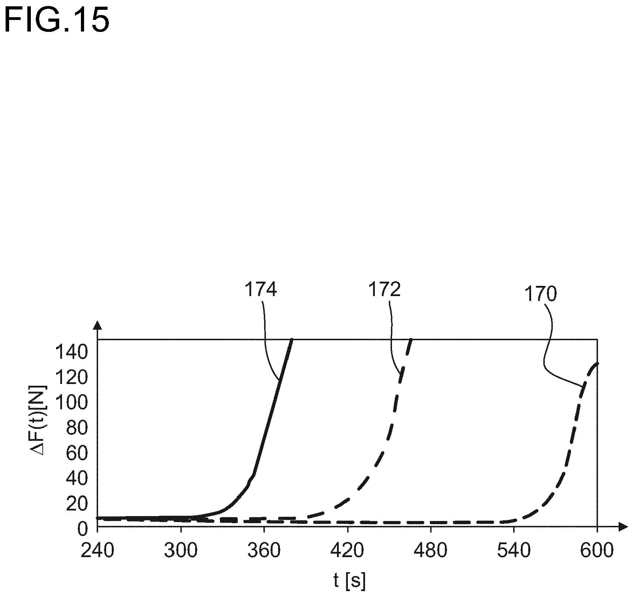

Figur 15 zeigt ein Diagramm von experimentellen Ergebnissen zur Widerstandskraft eines Halbzeugs 114 in einem Ausführungsbeispiel eines Verfahrens zur Herstellung mindestens eines Formelements 110. Insbesondere sind Ergebnisse eines Dreipunkbiegeversuchs 169, wie beispielsweise in Figur 14 gezeigt, mit Halbzeugen 114 illustriert, welche in einem Ölbad bei 140°C, 150°C und 160°C eine Aushärtungsreaktion durchliefen. Die horizontale Achse zeigt einen linearen Zeitverlauf t in Sekunden. Auf der vertikalen Achse ist eine mittlere Kraft $\Delta F(t)$ in Newton [N] zur Auslenkung des Halbzeugs 114 um 2 mm aufgetragen. Zur Bestimmung der Kraftverläufe, insbesondere des ersten mittleren Kraftverlaufs 170 bei 140°C, des zweiten mittleren Kraftverlaufs 172 bei 150°C und des dritten mittleren Kraftverlaufs 174 bei 160°C, wurden Dreipunkbiegeversuche 169 durchgeführt. Es wurden Dreipunkbiegeversuche 169 mit stabförmigen Halbzeugen 114 aus glasfaserverstärktem Kunststoff (GFK) in ausgehärtetem Zustand und während einem Durchlaufen der Aushärtungsreaktion in einem Ölbad bei verschiedenen Temperaturen durchgeführt. Weiterhin wurden dynamische Dreipunkbiegeversuche 169 mit Halbzeugen 114 während des Durchlaufens der Aushärtungsreaktion, insbesondere von dem biegeschlaffen Zustand (I) bis hin zu dem biegesteifen Zustand (IV), bei Temperaturen von 140°C, 150°C und 160°C durchgeführt. Dabei betrug ein Abstand zwischen zwei Lagerpunkten, insbesondere zwischen zwei Auflagern, 150 mm. Die dynamischen Dreipunkbiegeversuche 169, insbesondere die Versuche im Ölbad, wurden mit einer Frequenz von 1 Hz und einer Amplitude von +/-2mm ausgeführt. Für jedes der Halbzeuge 114 wurde eine Kraft ermittelt, welche zu einer Auslenkung des Halbzeugs 114, insbesondere zu einer Biegung des Halbzeugs 114, nach oben und/oder unten von 2mm führte. Daraus wurde für jede der drei Temperaturen, 140°C, 150°C und 160°C, eine mittlere Kraft ΔF(t) bestimmt, welche zu einer Auslenkung der Halbzeuge 114 von 2 mm führte. Zu Beginn des dynamischen Dreipunktbiegeversuchs 169 wiesen die Halbzeuge 114 den biegeschlaffen Zustand auf. Insbesondere können die in der Versuchsanordnung ermittelten Veränderungen der mittleren Kraft ΔF(t), insbesondere eine Steigung der in Figur 15 illustrierten Kraftkurven, qualitativ sein, beispielsweise da sich das zu Beginn weiche Halbzeug 114 den Auflagen anpasste und der gesamte Aufbau dadurch beispielsweise weniger steif war.

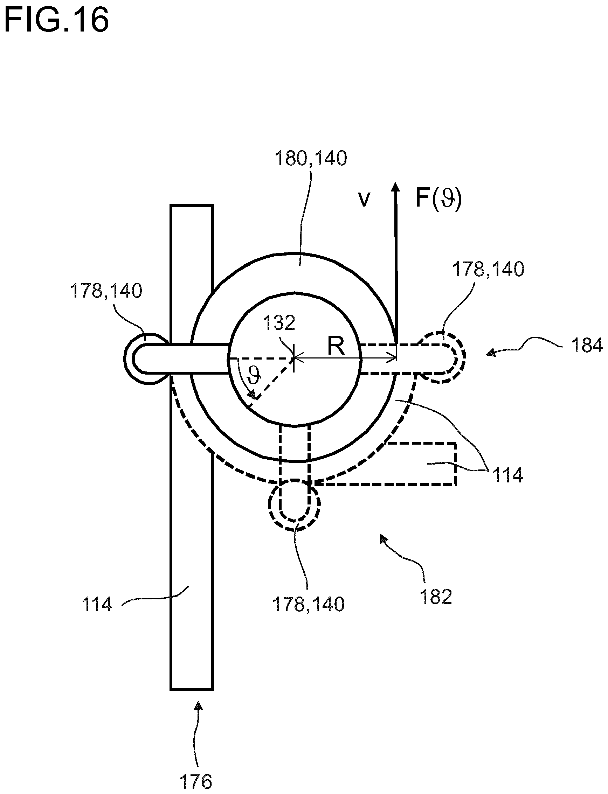

Figur 16 zeigt einen Versuchsaufbau zum Formen eines Halbzeugs 114 in Schritt c) eines Ausführungsbeispiels eines Verfahrens zur Herstellung mindestens eines Formelements 110. Insbesondere ist ein Versuchsaufbau, beispielsweise ähnlich oder analog zu einer Rohrbiegemaschine, dargestellt, in welchem dem Halbzeug 114, insbesondere einem Composite-Schlauch, eine Geometrie des Formelements 110 aufgeprägt wird. Bei der Durchführung des Versuchs wurde das Halbzeug 114 zunächst bei einer konstanten Temperatur, beispielsweise bei 150°C, für eine definierte Zeitdauer, z.B. für fünf Minuten, in einem Ölbad erhitzt, was beispielsweise dem Schritt b) 116 des Verfahrens zur Herstellung von Formelementen 110 entsprechen kann.

Danach wurde das Halbzeug 114 in einer ersten Position 176 in den in Figur 16 gezeigten Versuchsaufbau eingebracht. Insbesondere wurde das Halbzeug 114 zwischen einer Andruckrolle 178 und einer kreisförmigen Matrize 180 eingespannt. Die Andruckrolle 178 und die kreisförmige Matrize 180 sind beispielsweise Teil einer Formgebeeinheit 140, wobei die Andruckrolle 178 in einem Winkel ϑ um eine Achse 132 bewegt werden kann, wobei die Achse 132 durch den Mittelpunkt der kreisförmigen Matrize 180 verläuft. In der ersten Position 176 befand sich die Andruckrolle 178 in einem Winkel von ϑ = 0°.

Nach dem Einbringen des Halbzeugs 114 in der ersten Position 176 zwischen der Andruckrolle 178 und der kreisförmigen Matrize 180, wurde das Halbzeug 114 durch ein Bewegen der umlaufenden Andruckrolle 178 mit konstanter Geschwindigkeit v gegen die kreisförmig Matrize 180 gedrückt, was beispielsweise dem Schritt c) 118 des Verfahrens zur Herstellung von Formelementen 110 entsprechen kann. Die Andruckrolle 178 wurde in die zweite Position 182 gebracht, wodurch das Halbzeug 114 beispielsweise zu einem Viertelkreis mit Radius R = 50 mm gebogen wurde. Insbesondere wurde die Andruckrolle 178 um einen Winkel ϑ = 90° um die kreisförmige Matrize 180 von der ersten Position 176 in die zweite Position 182 bewegt. Eine von der Andruckrolle 178 auf das Halbzeug 114 ausgeübte Kraft F(ϑ) wurde dabei über ein Seil mit einem Hebel von 50 mm aufgebracht und kontinuierlich gemessen. Das Halbzeug 114 durchlief während der Umformung eine Aushärtungsreaktion, so dass aufgrund dieser laufenden Polymerisation die aufzubringende Kraft zur Umformung kontinuierlich zunahm insbesondere anstieg.

Beim Erreichen von ϑ ≈ 90° Umformung, insbesondere entsprechend einem Viertelkreis, d.h. bei Erreichen der zweiten Position 182, wurde die Bewegung der Andruckrolle 178 gestoppt und die Umformung des Halbzeugs 114 für eine weitere definierte Zeiteinheit, beispielsweise für 30 Sekunden, angehalten. In dieser Haltephase wurde die Temperatur innerhalb des Halbzeugs 114, beispielsweise im Schlauch, bestimmt. Dabei konnte festgestellt werden, dass die Temperatur des Halbzeugs 114, trotz Verlassen des Ölbades weiter anstieg. Dieser Temperaturanstieg des Halbzeugs 114 obwohl sich das Halbzeug 114 in der zweiten Position 182 und somit außerhalb des Ölbads befand kann beispielsweise begründet sein durch den exothermen Verlauf der Aushärtungsreaktion, insbesondere durch eine Exothermie der Reaktion.

Nach der Haltephase wurde versucht die Andruckrolle 178 in eine dritte Position 184 zu bewegen, um das Halbzeug 114 von dem Viertelkreis in einen Halbkreis mit Radius R = 50 umzuformen. Bei dem Versuch dieser Umformung wurde erneut die von der Andruckrolle 178 auf das Halbzeug 114 ausgeübte Kraft F(ϑ) bestimmt, wobei der Versuch bei Erreichen von ca. 80 bis 100 N, beispielsweise 85 N < F(ϑ) ≤ 100 N, zum Schutz der Anlage abgebrochen wurde. Zuletzt wurde nach einem Abkühlen des Halbzeugs 114, beispielsweise auf Raumtemperatur, eine Restenthalpie gemessen, beispielsweise eine Restexothermie, von 1,9 Joule pro Gramm [J/g] des Halbzeugs 114, beispielsweise des Composite-Schlauchs, über Differential Scanning Calorimetry (DSC), was beispielsweise 0,9 % einer ursprünglichen Reaktionsenthalpie entspricht.

Die folgende Tabelle zeigt beispielhafte Werte, welche bei einer Versuchsdurchführung, insbesondere bei einer Versuchsdurchführung wie oben beschrieben, eingehalten werden können, auftreten können oder messbar sein können. Insbesondere bestand das in den Beispielen verwendete Reaktivkunststoff-System beispielsweise aus dem Harz Bisphenol-A-Diglycidylether und dem Härter Dicyanamid (6,5 Gew.%) + 1 bis 3 Gew. % latentem Uron, zum Beispiel erhältlich unter dem Markennamen Dyhard® UR700. Der Fasermassenanteil wurde rechnerisch über die verwendete Menge an Glasmaterial, Kernmaterial, Hilfsmaterialien und dem Gesamtgewicht der Halbzeuge bei 65% +/-2% ermittelt.

| | Ausführungsbeispiel 1 | Ausführungsbeispiel 2 |
|---|---|---|
| Composite-Durchmesser außen [mm] | 20,6 | 21,5 |

(fortgesetzt)

| | Ausführungsbeispiel 1 | Ausführungsbeispiel 2 |
|---|---|---|
| Composite-Durchmesser innen [mm] | 10 | 10 |
| PE-Inliner-Durchmesser innen [mm] | 8 | 8 |
| Krümmungsradius [mm] | 50 | 50 |
| Ölbadtemperatur [°C] | 150 | 150 |
| Zeit Eintauchen Ölbad [min:s] | 0:00 | 0:00 |
| Ende Eintauchen Ölbad [min:s] | 5:00 | 6:30 |
| Beginn Biegen [min:s] | 5:25 | 6:32 |
| Ende Biegen [min:s] | 5:40 | 6:40 |
| Maximale Umformkraft [N] | 22 | 20 |
| Ende Haltezeit [min:s] | 6:06 | 7:07 |
| Kraft im Test auf Formstabilität [N] | > 85 | > 115 |
| Verweilzeit in Schritt b) [s] | 300 | 390 |
| Verweilzeit in Schritt c) [s] | 66 | 37 |
| Restenthalpie nach Auskühlen [J/g] | 1,3 | $\leq 1$ |
| Restenthalpie [% Reaktionsenthalpie] | 0,9 | < 0,8 |

Bezugszeichenliste

| | |
|---|---|
| 110 | Formelement |
| 112 | Schritt a) |
| 114 | Halbzeug |
| 116 | Schritt b) |
| 118 | Schritt c) |
| 120 | Schritt d) |
| 122 | erster Kreis |
| 124 | zweiter Kreis |
| 126 | dritter Kreis |
| 128 | vierter Kreis |
| 130 | Steuerungsschritt e) |
| 132 | Achse |
| 134 | Geschwindigkeit V |
| 136 | Länge L(t) |
| 138 | Länge $\Delta L^i$ |
| 140 | Formgebeeinheit |
| 142 | Bewegungseinheit |
| 144 | Rolle |
| 146 | Förderelemente |
| 148 | Vorrichtung zum Herstellen von Formelementen |
| 150 | Energiezuführeinheit |
| 152 | Steuereinheit |
| 154 | Temperatursensor |
| 155 | Geschwindigkeitssensor |
| 156 | Antrieb |
| 158 | Qualitätssensor |
| 160 | Viskosität $\eta$ |
| 162 | Speichermodul G' |

164 Verlustmodul G"
166 linke vertikale Achse
168 rechte vertikale Achse
169 Dreipunktbiegeversuch
170 erster mittlerer Kraftverlauf bei 140°C
172 zweiter mittlerer Kraftverlauf bei 150°C
174 dritter mittlerer Kraftverlauf bei 160°C
176 erste Position
178 Andruckrolle
180 kreisförmige Matrize
182 zweite Position
184 dritte Position

**Patentansprüche**

1. Verfahren zur Herstellung mindestens eines Formelements (110), wobei das Formelement (110) eine Geometrie aufweist, wobei das Verfahren die folgenden Schritte umfasst:

   a) Bereitstellen eines Halbzeugs (114) in einem biegeschlaffen Zustand (I), wobei das Halbzeug (114) ein Reaktivkunststoff-Material und Verstärkungsfasern aufweist, wobei die Verstärkungsfasern zumindest teilweise in das Reaktivkunststoff-Material eingebettet sind;
   b) Überführen des Halbzeugs (114) von dem biegeschlaffen Zustand (I) in einen formbaren Zustand (II) durch Zufuhr einer ersten Energiemenge, wobei das Halbzeug (114) in dem biegeschlaffen Zustand (I) einen ersten Umsatzgrad aufweist, wobei das Halbzeug (114) in einem formbaren Zustand (II) einen zweiten Umsatzgrad aufweist, wobei der erste Umsatzgrad geringer ist als der zweite Umsatzgrad;
   c) Formen des Halbzeugs(114), wobei dem Halbzeug (114) die Geometrie des Formelements (110) aufgeprägt wird, wobei das Halbzeug (114) während der Formgebung von dem formbaren Zustand (II) in einen formstabilen Zustand (III) überführt wird; und
   d) Überführen des Halbzeugs (114) von dem formstabilen Zustand (III) in einen biegesteifen Zustand (IV).

2. Verfahren nach dem vorhergehenden Anspruch, wobei das Verfahren zur Herstellung mindestens eines Formelements (110) ein kontinuierliches Herstellungsverfahren umfasst.

3. Verfahren nach einem der vorhergehenden Ansprüche, wobei das Halbzeug (114) oberflächlich versiegelt ist.

4. Verfahren nach einem der vorhergehenden Ansprüche, wobei das Halbzeug (114) in Schritt c) durch Zufuhr mindestens einer zweiten Energiemenge von dem formbaren Zustand (II) in den formstabilen Zustand (III) überführt wird.

5. Verfahren nach einem der vorhergehenden Ansprüche, wobei das Halbzeug (114) in Schritt d) durch Zufuhr mindestens einer dritten Energiemenge von dem formstabilen Zustand (III) in den biegesteifen Zustand (IV) überführt wird.

6. Verfahren nach einem der vorhergehenden Ansprüche, wobei das in Schritt a) bereitgestellte Halbzeug (114) eine Ausgangsform aufweist ausgewählt aus der Gruppe bestehend aus: einem Strang, insbesondere einem Strangprofil; einem Stab; einem Rohr; einer Platte; einem Endlosprofil, einer Endlosplatte.

7. Verfahren nach einem der vorhergehenden Ansprüche, wobei das in Schritt a) bereitgestellte Halbzeug (114) mittels Filamentwinding oder Pultrusion oder Pullwinding oder Prepregverfahren hergestellt ist.

8. Verfahren nach einem der vorhergehen Ansprüche, wobei das Formen des Halbzeugs (114) in Schritt c) ein Krümmen des Halbzeugs (114) um mindestens eine Achse (132) umfasst.

9. Verfahren nach einem der vorhergehen Ansprüche, wobei das Halbzeug (114) in Schritt c) in eine Helix- oder Spiralform geformt wird.

10. Verfahren nach einem der vorhergehenden Ansprüche, wobei das Verfahren weiterhin mindestens einen Steuerungsschritt e) aufweist, umfassend:

e1) Bestimmen des Umsatzgrads und/oder einer Umformbarkeit des Halbzeugs (114); und

e2) Regeln einer Geschwindigkeit des Halbzeugs (114) und/oder einer Energiezufuhr.

11. Formelement (110) hergestellt mittels einem Verfahren nach einem der vorhergehenden Ansprüche.

12. Computerprogramm umfassend computerausführbare Anweisungen zur Durchführung eines Steuerungsschritts wenn das Programm auf einem Computer oder Computernetzwerk ausgeführt wird, wobei der Steuerungsschritt ein Bestimmen eines Umsatzgrads und/oder einer Umformbarkeit eines Halbzeugs (114) umfasst, wobei der Steuerungsschritt weiterhin ein Anpassen einer Geschwindigkeit des Halbzeugs (114) und/oder einer Energiezufuhr zu dem Halbzeug (114) umfasst.

13. Vorrichtung (148) zum Herstellen von Formelementen (110), die Vorrichtung umfassend:

- mindestens eine Formgebeeinheit (140);
- mindestens eine Bewegungseinheit (142); und
- mindestens eine Energiezuführeinheit (150),

wobei die Vorrichtung (148) eingerichtet ist, um ein Halbzeug (114) von einem biegeschlaffen Zustand (I) in einen biegesteifen Zustand (IV) zu überführen, wobei das Halbzeug (114) in dem biegeschlaffen Zustand (I) einen ersten Umsatzgrad aufweist, wobei das Halbzeug (114) in einem formbaren Zustand (II) einen zweiten Umsatzgrad aufweist, wobei der erste Umsatzgrad geringer ist als der zweite Umsatzgrad, wobei das Halbzeug (114) ein Reaktivkunststoff-Material und Verstärkungsfasern aufweist, wobei die Verstärkungsfasern zumindest teilweise in das Reaktivkunststoff-Material eingebettet sind.

14. Vorrichtung (148) nach dem vorhergehenden Anspruch, wobei die Vorrichtung (148) weiterhin mindestens eine Steuereinheit (152) aufweist, wobei die Steuereinheit (152) eingerichtet ist, um einen Steuerungsschritt durchzuführen, wobei der Steuerungsschritt ein Bestimmen eines Umsatzgrads und/oder einer Umformbarkeit eines Halbzeugs (114) umfasst, wobei der Steuerungsschritt weiterhin ein Anpassen einer Geschwindigkeit des Halbzeugs (114) und/oder einer Energiezufuhr zu dem Halbzeug (114) umfasst.

15. Vorrichtung (148) nach einem der zwei vorhergehenden Ansprüche, wobei die Vorrichtung (148) eingerichtet ist, um zumindest Schritte b) bis d) eines Verfahrens zur Herstellung mindestens eines Formelements (110) gemäß einem der vorhergehenden, sich auf ein Verfahren beziehenden Ansprüche auszuführen.

# FIG.1

```
┌─────────────┐
│     112     │
└─────────────┘
       │
       ▼
┌─────────────┐
│     130     │
└─────────────┘
       │
       ▼
┌─────────────┐
│     116     │
└─────────────┘
       │
       ▼
┌─────────────┐
│     130     │
└─────────────┘
       │
       ▼
┌─────────────┐
│     118     │
└─────────────┘
       │
       ▼
┌─────────────┐
│     130     │
└─────────────┘
       │
       ▼
┌─────────────┐
│     120     │
└─────────────┘
```

# FIG.2

FIG.3

# FIG.4

# FIG.5

135

$R_K(t)$

136

134

...

# FIG.6

FIG.7A

FIG.7B

FIG.7C

FIG.7D

140

140

140

140

114

114

114

114

144

144

144

144

144

144

144

144

FIG.7E

FIG.7F

FIG.7G

FIG.7H

140

140

140

140

114

114

114

114

140

140

EP 3 670 145 A1

FIG.7I

FIG.7J

FIG.8A  FIG.8B  FIG.8C  FIG.8D

FIG.8E  FIG.8F  FIG.8G  FIG.8H

EP 3 670 145 A1

# FIG.9A  FIG.9B  FIG.9C

132

114

132

114

132

114

EP 3 670 145 A1

FIG.10A　　　FIG.10B　　　FIG.10C　　　FIG.10D

EP 3 670 145 A1

# FIG.11

FIG.12A

FIG.12B

FIG.12C

FIG.13

EP 3 670 145 A1

## FIG.14

# FIG.15

# FIG.16

Europäisches
Patentamt

European
Patent Office

Office européen
des brevets

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

EP 18 21 3825

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | US 2002/180112 A1 (KUSY ROBERT P [US] ET AL) 5. Dezember 2002 (2002-12-05) * Abbildungen 1,2 * * Absätze [0032] - [0036] * ----- | 1,2,4,5, 11,13 | INV. B29C53/12 |
| A | US 5 989 376 A (KUSY ROBERT P [US] ET AL) 23. November 1999 (1999-11-23) * das ganze Dokument * ----- | 1,11,13 | |

RECHERCHIERTE
SACHGEBIETE (IPC)

B29C

### UNVOLLSTÄNDIGE RECHERCHE

Die Recherchenabteilung ist der Auffassung, daß ein oder mehrere Ansprüche, den Vorschriften des EPÜ
nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:
Siehe Ergänzungsblatt C

| Recherchenort | Abschlußdatum der Recherche | Prüfer |
|---|---|---|
| München | 23. September 2019 | Schneider, Dominik |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04E09)

Europäisches
Patentamt

European
Patent Office

Office européen
des brevets

**UNVOLLSTÄNDIGE RECHERCHE
ERGÄNZUNGSBLATT C**

Nummer der Anmeldung

EP 18 21 3825

Vollständig recherchierbare Ansprüche:
        1-11, 13-15

Nicht recherchierte Ansprüche:
        12

Grund für die Beschränkung der Recherche:

Mehrere unabhängige Patentansprüche in der selben Kategorie (R.43 (2)
EPÜ). Verstreichen der Frist gemäß R.62a EPÜ.

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder
Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1, 2, 4, 5, 11, 13

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 18 21 3825

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1, 2, 4, 5, 11, 13

    kontinuierliches Herstellverfahren
    ---

2. Anspruch: 3

    Oberflächliche Versiegelung des Halbzeugs
    ---

3. Ansprüche: 6, 7

    Definition des Halbzeugs
    ---

4. Ansprüche: 8, 9

    Krümmen des Halbzeugs
    ---

5. Ansprüche: 10, 14, 15

    Steuerungsschritt/Steuereinheit
    ---

## ANHANG ZUM EUROPÄISCHEN RECHERCHENBERICHT
## ÜBER DIE EUROPÄISCHE PATENTANMELDUNG NR.

EP 18 21 3825

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-09-2019

| Im Recherchenbericht angeführtes Patentdokument | Datum der Veröffentlichung | Mitglied(er) der Patentfamilie | Datum der Veröffentlichung |
|---|---|---|---|
| US 2002180112 A1 | 05-12-2002 | US 2002180112 A1<br>US 2004122123 A1 | 05-12-2002<br>24-06-2004 |
| US 5989376 A | 23-11-1999 | US 5869178 A<br>US 5989376 A | 09-02-1999<br>23-11-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 2512364 A
- FR 2837250 A1
- JP 54090272 A
- DE 3037616 A1
- DE 4015117 A1
- DE 102005013750 B3
- US 2002046587 A1
- DE 102012219639 A1